# EUROPEAN PATENT APPLICATION

(11) **EP 4 394 526 A1**
(43) Date of publication of application: **03.07.2024**
(21) Application number: 22882937.0
(22) Date of filing: 20.10.2022
(51) Int. Cl.: G04R 60/06

(54) **WEARABLE DEVICE, BEIDOU SHORT MESSAGE SENDING METHOD AND RELATED PRODUCT**

(30) Priority: 22.10.2021 CN 202111234087
(71) Applicant: Huawei Technologies Co., Ltd., Shenzhen, Guangdong 518129 (CN)
(72) Inventor: LI, Xiaodong, Shenzhen, Guangdong 518129 (CN); ZHAO, Menglong, Shenzhen, Guangdong 518129 (CN); YANG, Bo, Shenzhen, Guangdong 518129 (CN); YANG, Wenjian, Shenzhen, Guangdong 518129 (CN); LIU, Zhuang, Shenzhen, Guangdong 518129 (CN); LIN, Nan, Shenzhen, Guangdong 518129 (CN)
(74) Representative: Körber, Martin Hans
(86) International application number: PCT/CN2022/126389
(87) International publication number: WO 2023/066332

(57) **Abstract**

This application provides a wearable device, including an antenna radiator, a BeiDou communication module, and a processor. The BeiDou communication module includes a satellite positioning unit and a short packet unit. The satellite positioning unit is configured to obtain, under control of the processor, global positioning information by using the antenna radiator. The short packet unit is configured to multiplex, under control of the processor, the antenna radiator to receive/send a BeiDou short packet. This application further provides a BeiDou short packet sending method applied to the wearable device, and the method includes: When receiving an input signal and/or when determining that a current environment meets a trigger condition, the processor of the wearable device controls the BeiDou communication module to send the BeiDou short packet by using the antenna radiator. According to the solutions of this application, the wearable device can communicate with the outside by using a BeiDou satellite in an environment without a network, thereby meeting a communication requirement of a user in an emergency scenario.

## Description

This application claims priority to Chinese Patent Application No. 202111234087.5, filed with the China National Intellectual Property Administration on October 22, 2021 and entitled "WEARABLE DEVICE, BEIDOU SHORT PACKET SENDING METHOD, AND RELATED PRODUCT", which is incorporated herein by reference in its entirety.

### TECHNICAL FIELD

This application relates to the field of consumer electronic devices, and in particular, to a wearable device, a BeiDou short packet sending method, and a related product.

### BACKGROUND

A current wearable device is designed to meet daily wearing and use requirements of a user, and can support functions such as daily communication, leisure and entertainment, sports monitoring, and physical sign monitoring of the user. However, in an emergency scenario, for example, when no network is available or emergency rescue is required, a conventional wearable device cannot communicate with an external network, and cannot meet a user requirement in the emergency scenario.

### SUMMARY

Embodiments of this application provide a wearable device, a BeiDou short packet sending method, and a related product, to implement external communication without a network.

According to a first aspect, an embodiment of this application provides a wearable device, where the wearable device includes an antenna radiator, a BeiDou communication module, and a processor; and the BeiDou communication module includes a satellite positioning unit and a short packet unit; the satellite positioning unit is configured to obtain, under control of the processor, global positioning information by using the antenna radiator; and the short packet unit is configured to multiplex, under control of the processor, the antenna radiator to receive/send a BeiDou short packet.

In this solution, the BeiDou communication module has a BeiDou short packet receiving and sending function, and can implement communication between the wearable device and a BeiDou short packet satellite. The BeiDou communication module can exchange, with the processor, user authentication information, short packet payload information, and protocol information that needs to be processed by the processor. Both the short packet unit and the satellite positioning unit in the BeiDou communication module are electrically connected to the antenna radiator, and the short packet unit and the satellite positioning unit may share a same antenna radiator to receive/send a signal or receive a signal (that is, the short packet unit and the satellite positioning unit multiplex the antenna radiator). The satellite positioning unit can receive global positioning information from the positioning satellite by using the antenna radiator. The global positioning information is used to indicate a location of a user, and the global positioning information may be included in a BeiDou short packet, or may be used in a daily application scenario. The short packet unit may receive the BeiDou short packet from the short packet satellite in the BeiDou satellite navigation system by using the antenna radiator, or send the BeiDou short packet to the short packet satellite. The BeiDou short packet can be used for emergency communication.

In this solution, the wearable device is integrated with a BeiDou short packet function, and can communicate with the outside in an environment without a network, thereby meeting a communication requirement of a user in an emergency scenario. In addition, compared with a dedicated BeiDou terminal that is large in size, heavy in weight, inconvenient to carry, has a weak human-machine interaction capability, and has a single function, the wearable device is small in size and weight, is easy to carry, and is convenient for human-machine interaction. The wearable device may have rich functions for the user, for example, motion monitoring, activity monitoring, life assistance, leisure and entertainment, physical sign monitoring, environment monitoring, and the like, and can meet a use requirement of the user in a daily scenario.

In addition, in this solution, the satellite positioning unit and the short packet unit multiplex the antenna radiator, so that one antenna radiator can be used to receive or receive/send signals of different frequencies. In addition, structural space of the wearable device can be saved, a weight of the wearable device can be reduced, and a structure design can be simplified, thereby improving aesthetics of the wearable device.

In an implementation of the first aspect, the short packet unit receives/sends the BeiDou short packet by using the antenna radiator in a time division multiplexing manner. This solution can adapt to signal frequency band distribution of the satellite positioning unit and the short packet unit.

In an implementation of the first aspect, the satellite positioning unit is further configured to: under control of the processor, obtain a timing signal by using the antenna radiator, and send the timing signal to the short packet unit; and the short packet unit is configured to: under control of the processor, perform clock synchronization based on the timing signal, and after clock synchronization, multiplex the antenna radiator to receive/send the BeiDou short packet. In this solution, the satellite positioning unit may obtain the timing signal from a positioning satellite, and the timing signal is used by the short packet unit to perform clock synchronization. A solution of obtaining the timing signal by using the satellite positioning unit is mature, and it is easy to implement component stacking and a circuit design of the wearable device.

In an implementation of the first aspect, the short packet unit is configured to: under control of the processor, multiplex the antenna radiator to obtain a timing signal, perform clock synchronization based on the timing signal, and after clock synchronization, multiplex the antenna radiator to receive/send the BeiDou short packet. In this solution, the short packet unit may obtain the timing signal from a positioning satellite, and the timing signal is used by the short packet unit to perform clock synchronization. The short packet unit is a new BeiDou communication module.

In this solution, it is possible that no satellite positioning unit is disposed, so that a circuit integration level of the wearable device can be improved, a circuit design can be simplified, structural space of the wearable device can be saved, and a weight of the wearable device can be reduced.

In an implementation of the first aspect, the wearable device includes a housing, both the BeiDou communication module and the processor are located in the housing, the antenna radiator is connected to the housing, and at least a part of the antenna radiator is exposed outside the housing.

In this solution, a part or all of the antenna radiator is exposed outside the housing, that is, a part or all of the antenna radiator may be used as an appearance part that can be directly seen by the user. This design can ensure signal receiving and sending performance of the antenna radiator.

In an implementation of the first aspect, the wearable device includes a rotating shaft, where the rotating shaft is located on an outer side of the housing, and connects the housing to the antenna radiator; the antenna radiator is located outside the housing; and the antenna radiator can rotate around a first axis and a second axis relative to the housing by using the rotating shaft, where the second axis intersects the first axis.

In this solution, all of the antenna radiator is exposed outside the housing. The rotating shaft connects the antenna radiator to the housing, and the antenna radiator rotates around the two intersecting axes by using the rotating shaft. When the antenna radiator rotates and is away from the housing, clearance of the antenna radiator can be increased, and a radiation aperture of the antenna radiator can be increased. In addition, a distance from the antenna radiator to an arm of the user can be increased, so that absorption of an antenna signal by the human body is reduced, and a reduction amplitude of a hand phantom is reduced. Therefore, antenna performance of the antenna radiator can be further enhanced. Therefore, in this solution, antenna performance of the antenna radiator is greatly improved. In addition, as an appearance part of the wearable device, a design in which the antenna radiator can rotate around the two intersecting axes can improve manipulation performance and playability of the wearable device, thereby improving user experience.

In an implementation of the first aspect, the antenna radiator has a first shaft hole, and the housing has a second shaft hole; the rotating shaft includes a first rotating shaft and a second rotating shaft, and the first rotating shaft is connected to an axial end of the second rotating shaft; a center line of the first rotating shaft is the first axis, and a center line of an end that is of the second rotating shaft and that is away from the first rotating shaft is the second axis; the first rotating shaft and the first shaft hole are in rotation fitting, so that the antenna radiator can rotate around the first axis relative to the housing; and the second rotating shaft and the second shaft hole are in rotation fitting, so that the antenna radiator can drive the rotating shaft to rotate around the second axis relative to the housing.

In this solution, by designing a specific structure of the rotating shaft and a rotating shaft cooperation manner, the antenna radiator can well rotate around the two intersecting axes. In addition, this solution simplifies product design and manufacturing (including assembly), and product reliability is high.

In an implementation of the first aspect, the end that is of the second rotating shaft and that is away from the first rotating shaft is exposed from the second shaft hole, and the end that is of the second rotating shaft and that is away from the first rotating shaft has a limiting groove; the wearable device includes a limiting fastener, and the limiting fastener has a notch; and the limiting fastener is clamped into the limiting groove, and is in contact with an area that is of the housing and that is located around the second rotating shaft, to prevent the second rotating shaft from being detached from the second shaft hole.

In this solution, by using a design of the limiting groove and the limiting fastener, assembly of the rotating shaft and the housing can be simplified, and a detachable connection can be formed between the rotating shaft and the housing, thereby facilitating product maintenance.

In an implementation of the first aspect, the wearable device includes a circuit board and a spring, both the circuit board and the spring are located in the housing, and the spring is installed on the circuit board; both the processor and the BeiDou communication module are disposed on the circuit board, and the spring is electrically connected to both the satellite positioning unit and the short packet unit in the BeiDou communication module; the housing has a first penetrating hole, and the first penetrating hole penetrates the housing to connect an inner side and an outer side of the housing; and the wearable device includes a first adapter, the first adapter passes through the first penetrating hole, one end of the first adapter is connected to the spring in the housing, and the other end of the first adapter is connected to the rotating shaft located outside the housing.

In this solution, the antenna radiator is connected to the BeiDou communication module on the circuit board by using the first adapter and the spring, so that the antenna radiator outside the housing can be electrically connected to a BeiDou radio frequency circuit inside the housing. In addition, this solution simplifies product design and manufacturing (including assembly), and product reliability is high.

In an implementation of the first aspect, the housing includes a main part and a lug part, where the main part forms installation space through enclosing, the lug part is connected to an outer side of the main part, and the lug part forms an installation groove through enclosing; the first penetrating hole penetrates the main part, and connects the installation space and the installation groove; the second shaft hole is disposed on the lug part; the circuit board is installed in the installation space; a display is installed on the main part and covers the installation space; the rotating shaft and the second shaft hole of the lug part are in rotation fitting, and the rotating shaft is rotationally connected to the antenna radiator; and one end of the first adapter is located in the installation space and is connected to the spring, and the other end of the first adapter is located in the installation groove and is in contact with the rotating shaft.

In this solution, a structure of the housing is designed, so that the housing can well install and support the rotating shaft and the antenna radiator, and an electrical connection between the antenna radiator outside the housing and the BeiDou radio frequency circuit inside the housing can be implemented. This solution simplifies product design and manufacturing (including assembly), and product reliability is high.

In an implementation of the first aspect, the wearable device includes the display, and the display is installed on the housing; the antenna radiator includes a frame and a connection part, the frame is connected to the connection part, and the frame is in a closed ring shape or an open ring shape; and the connection part is rotationally connected to the rotating shaft, so that the antenna radiator can rotate around the first axis to a closed position, where at the closed position, the frame and the housing are closed, and the frame surrounds the display.

In this solution, the antenna radiator is made into an appearance part that can surround the display (when the wearable device is a smart watch, the antenna radiator may be used as a bezel), so that an antenna function can be implemented by using the appearance part of the product, and product appearance experience can be ensured.

In an implementation of the first aspect, the housing has an accommodating cavity; a part of the antenna radiator is located in the accommodating cavity, and the other part is located outside the accommodating cavity and is exposed outside the housing. In this solution, a part of the antenna radiator may be used as an appearance part that can be directly seen by the user. This design can ensure signal receiving and sending performance of the antenna radiator.

In an implementation of the first aspect, the antenna radiator includes an insulating base and a conductive layer covering the insulating base; a part of the insulating base and a part of the conductive layer are both fastened in the accommodating cavity, and the other part of the insulating base and the other part of the conductive layer are both located outside the accommodating cavity and are both exposed outside the housing; and the conductive layer is electrically connected to both the satellite positioning unit and the short packet unit in the BeiDou communication module.

In this solution, the insulating base is an insulator, the conductive layer is a thin layer formed by a conductor, the conductive layer is a part of the antenna radiator for receiving/sending a signal, and the insulating base is used as a carrier of the conductive layer. The conductive layer may cover only a part of a surface of the insulator, or may cover all of the surface of the insulator. Only a part of the antenna radiator is exposed outside the housing. In this solution, by using the foregoing antenna design, structural space of the wearable device can be effectively used to arrange an antenna, thereby saving the structural space of the wearable device, reducing a weight of the wearable device, ensuring product appearance experience, and ensuring antenna performance.

In an implementation of the first aspect, the insulating base has at least two separating parts, and the at least two separating parts are spaced from each other, and divide the conductive layer into several mutually insulated conductive areas, where one conductive area is electrically connected to both the satellite positioning unit and the short packet unit in the BeiDou communication module; the wearable device includes a first communication module disposed in the housing, and the first communication module is electrically connected to the processor and the remaining conductive areas; and the first communication module is configured to: under control of the processor, receive/send a first network signal by using the remaining conductive areas.

In this solution, the first communication module is another wireless communication module other than the BeiDou communication module. The first communication module includes but is not limited to at least one of another satellite communication module (such as a GPS communication module), a mobile communication module (for example, a 2G mobile communication module, a 3G mobile communication module, a 4G mobile communication module, or the like), a Wi-Fi module, a Bluetooth module, an NFC module, an infrared (infrared, IR) module, or the like. A communication manner that can be implemented by the first communication module includes but is not limited to at least one of other satellite communication, mobile communication, Wi-Fi communication, Bluetooth communication, NFC communication, infrared communication, and the like. When there are at least two first communication modules and the remaining conductive areas, one first communication module is electrically connected to one of the remaining conductive areas. The first network signal is a signal received/sent by the first communication module. For example, the first network signal may be at least one of another satellite signal, a mobile communication signal, a Wi-Fi signal, a Bluetooth signal, an NFC signal, an infrared signal, or the like.

In this solution, the conductive layer is partitioned by using the separating parts, so that the BeiDou antenna radiator and another antenna radiator can be constructed, and the wearable device can receive/send a BeiDou signal, and can further receive/send the first network signal. In this way, the wearable device can be used in both an emergency communication scenario and a daily life scenario, thereby greatly improving product performance and market competitiveness of the wearable device.

In an implementation of the first aspect, the wearable device includes a circuit board and a spring, both the circuit board and the spring are located in the housing, and the spring is installed on the circuit board; both the processor and the BeiDou communication module are disposed on the circuit board, and the spring is electrically connected to both the satellite positioning unit and the short packet unit in the BeiDou communication module; the housing has a second penetrating hole, and the second penetrating hole connects the accommodating cavity and an inner side of the housing; the wearable device includes a second adapter, where the second adapter is located in the second penetrating hole, one end of the second adapter is connected to the conductive layer in the part that is of the antenna radiator and that is fastened in the accommodating cavity, and the other end of the second adapter is connected to the spring.

In this solution, the antenna radiator is connected to the BeiDou communication module on the circuit board by using the second adapter and the spring, so that the antenna radiator outside the housing can be electrically connected to a BeiDou radio frequency circuit inside the housing. In addition, this solution simplifies product design and manufacturing (including assembly), and product reliability is high.

In an implementation of the first aspect, the second adapter is conductive silicone, a spring, or a cable. The second adapter is simple in design and manufacturing and has high reliability. In particular, the second adapter made of the conductive silicone has sealing performance, and can ensure waterproof performance of the wearable device.

In an implementation of the first aspect, the insulating base is a non-conductive ceramic; and/or the conductive layer is metal or a conductive ceramic.

In this solution, material designs of the insulating base and the conductive layer are independent of each other. The insulating base made of the non-conductive ceramic is light, and is conducive to implementing lightness of the wearable device. The conductive layer made of the metal not only has good conductivity, but also has good appearance performance, and can ensure appearance experience of the wearable device. The conductive layer made of the conductive ceramic has good conductivity, and is light, which is conducive to implementing lightness of the wearable device.

In an implementation of the first aspect, the wearable device includes a display, and the display is installed on the housing; and the antenna radiator is in a closed ring shape, and the antenna radiator surrounds a periphery of the display.

In this solution, the antenna radiator is made into an appearance part that can surround the display (when the wearable device is a smart watch, the antenna radiator may be used as a bezel), so that an antenna function can be implemented by using the appearance part of the product, and product appearance experience can be ensured.

In an implementation of the first aspect, the housing includes a first housing and a second housing installed on the first housing; the first housing forms installation space through enclosing; the accommodating cavity is disposed on the second housing, and the accommodating cavity penetrates the second housing and is in communication with the installation space; both the BeiDou communication module and the processor are located in the installation space; the wearable device includes a conductive material; a first part of the conductive material is located outside the accommodating cavity and covers a local surface of the second housing, and a second part of the conductive material fills the accommodating cavity and is electrically connected to both the satellite positioning unit and the short packet unit in the BeiDou communication module; and the conductive material is used as the antenna radiator.

In this solution, material compositions of the first part and the second part of the conductive material may be the same or different. An orthographic projection area of the first part on the second housing may be larger, and an orthographic projection area of the second part on the second housing may be smaller, that is, the conductive material may form a "mushroom head" or an "umbrella structure" as a whole. The second part filling the accommodating cavity means that the second part basically completely fills the accommodating cavity, and a shape of the second part basically matches a shape of the accommodating cavity. In this solution, only a part of the antenna radiator is exposed on the outer surface of the housing. In this solution, by using the foregoing antenna design, structural space of the wearable device can be effectively used to arrange an antenna, thereby saving the structural space of the wearable device, reducing a weight of the wearable device, ensuring product appearance experience, and ensuring antenna performance.

In an implementation of the first aspect, the wearable device includes a display, the display is installed on the first housing, the display and the second housing cover the installation space, and the second housing surrounds a periphery of the display; and the accommodating cavity is located on an outer side of the display.

In this solution, the second housing surrounds the periphery of the display, and the antenna radiator is located on the periphery of the display, so that structural space of the wearable device can be effectively used to arrange an antenna, thereby saving the structural space of the wearable device, reducing a weight of the wearable device, ensuring product appearance experience, and ensuring antenna performance.

In an implementation of the first aspect, the second housing has an outer surface that is opposite to the first housing, and the accommodating cavity penetrates the outer surface. In this solution, a structure of the accommodating cavity is simple, and is easy to design and manufacture, thereby facilitating simplification of a related design of an antenna.

In an implementation of the first aspect, the wearable device includes a circuit board and a spring, and both the circuit board and the spring are located in the installation space; both the processor and the BeiDou communication module are disposed on the circuit board; the spring is installed on the circuit board, and is electrically connected to both the satellite positioning unit and the short packet unit in the BeiDou communication module, and the spring is connected to the conductive material; and from an end that is of the accommodating cavity and that is away from the spring to an end that is of the accommodating cavity and that is close to the spring, a cross-sectional area of the accommodating cavity tends to increase.

In this solution, a definition of the cross-sectional area may be as follows: Cross-section is performed at different positions of the accommodating cavity perpendicular to an extension direction of the accommodating cavity, to obtain a plurality of closed cross-sectional patterns that are arranged in a spaced manner in sequence along the extension direction, where an area of each cross-sectional pattern is referred to as a cross-sectional area. "Tend to increase" may include continuous and even increase of an area of each cross section, or may include an overall increasing trend that is of an area of each cross section and in which a local abrupt value change and unevenness exist.

Due to a structural size limitation, an area of the outer surface of the second housing is small. In view of this, an opening formed on the outer surface of the second housing by the accommodating cavity of the second housing may be small, to adapt to the outer surface with a small area. In addition, to increase mechanical connection strength between the second part and the first spring, to ensure electrical connection reliability between the second part and the spring, the opening at an end that is of the accommodating cavity and that is close to the installation space of the first housing may be large. In this way, a contact area between the second part of the antenna radiator and the spring can be increased, and the mechanical connection strength and the electrical connection reliability between the second part and the spring can be increased.

In an implementation of the first aspect, the first part of the conductive material is metal; and/or the second part of the conductive material is a conductive ceramic; and/or a material of the second housing is a non-conductive ceramic.

In this solution, material designs of the first part, the second part, and the second housing are independent of each other. The first part made of the metal has good conductivity, which helps ensure antenna performance, and further has good appearance texture, which helps ensure appearance experience of the wearable device. The second part made of the conductive ceramic has good conductivity, which helps ensure antenna performance, is light, and is conducive to lightness of the wearable device. The second housing made of the non-conductive ceramic has good insulation performance, which helps ensure antenna performance, is light, and is conducive to lightness of the wearable device.

In an implementation of the first aspect, the housing forms installation space through enclosing, and the accommodating cavity penetrates the housing and is in communication with the installation space; both the BeiDou communication module and the processor are located in the installation space; and the antenna radiator has an exposed end located outside the accommodating cavity, and the antenna radiator is telescopic, so that a distance between the exposed end and the housing changes.

In this solution, a part of the antenna radiator may always be located in the accommodating cavity, and the exposed end of the antenna radiator may always be located outside the housing. The antenna radiator may be similar to a telescopic umbrella pole of an umbrella. In this solution, a telescopic antenna radiator is designed. When the antenna radiator is extended, an effective length of the antenna radiator is increased, the distance between the exposed end and the housing is increased, and a distance between the exposed end and an electrical component in the housing and a distance between the exposed end and an arm of the user are increased. This helps enhance antenna performance of the antenna radiator. In addition, in this solution, structural space of the wearable device can be effectively used to arrange an antenna, to save the structural space of the wearable device, reduce a weight of the wearable device, ensure product appearance experience, and ensure antenna performance.

In an implementation of the first aspect, the antenna radiator includes at least two sub-radiators that are slidably connected in sequence, and at least a part of one sub-radiator is located in the accommodating cavity. The telescopic design of this solution is simple and easy to manufacture, and is a reliable structure, which helps ensure antenna performance.

In an implementation of the first aspect, each of the sub-radiators is of a tubular structure; and in every two adjacent sub-radiators, one of the sub-radiators is located on a periphery of the other sub-radiator. The telescopic design of this solution is simple and easy to manufacture, and is a reliable structure, which helps ensure antenna performance.

In an implementation of the first aspect, the wearable device includes a display, and the display has a display plane; the display is installed on the housing and covers the installation space; and the antenna radiator is telescopic in a direction parallel to the display plane of the display. In this solution, structural space of the wearable device can be effectively used to arrange an antenna, to save the structural space of the wearable device, reduce a weight of the wearable device, ensure product appearance experience, and ensure antenna performance.

In an implementation of the first aspect, the wearable device includes a housing and a wearing band, and the wearing band is connected to an outer side of the housing; both the BeiDou communication module and the processor are located in the housing; and the antenna radiator is located in the wearing band.

In this solution, the wearing band may be made of a soft insulating material, for example, nylon or woven. The wearing band can be wound around a human body part (for example, a wrist), and form a detachable connection (for example, a lock connection), to implement wearing of the wearable device. The antenna radiator is wrapped by the material of the wearing band, and the antenna radiator and the wearing band may form a sandwich structure. In this solution, the antenna radiator is disposed in the wearing band, so that internal space of the wearing band can be effectively used to arrange the antenna radiator, thereby saving internal space of the main unit of the wearable device. In addition, the antenna radiator is disposed in the wearing band, so that the antenna radiator is far away from a circuit board assembly of the wearable device, thereby ensuring antenna performance of the antenna radiator.

In an implementation of the first aspect, the wearable device includes a circuit board, a spring bar shaft, and a spring; the circuit board is located inside the housing, and the BeiDou communication module and the processor are both arranged on the circuit board; the spring is installed on the circuit board, and is electrically connected to both the satellite positioning unit and the short packet unit in the BeiDou communication module; the spring bar shaft is installed on the outer side of the housing; and the spring bar shaft is connected to the wearing band, and the spring bar shaft connects the antenna radiator to the spring.

In this solution, the wearing band is connected to the housing by using the spring bar shaft, and the wearing band may rotate relative to the housing. For example, when the spring bar shaft is fastened to the housing, the wearing band may be rotationally connected to the spring bar shaft. For example, an end part of the wearing band may wrap the spring bar shaft and rotate around the spring bar shaft. Alternatively, when the spring bar shaft is rotationally connected to the housing, the wearing band may be fastened to the spring bar shaft, and the wearing band and the spring bar shaft rotate together relative to the housing. In this solution, the antenna radiator is connected to the BeiDou communication module on the circuit board by using the spring bar shaft and the spring, so that the antenna radiator is electrically connected to the BeiDou radio frequency circuit. In addition, this solution simplifies product design and manufacturing (including assembly), and product reliability is high.

In an implementation of the first aspect, the wearable device further includes a first communication module, and the first communication module is electrically connected to both the processor and the antenna radiator; and the first communication module is configured to multiplex, under control of the processor, the antenna radiator to receive/send the first network signal.

In this solution, the first communication module and the BeiDou communication module share a same antenna radiator, and one antenna radiator is used to receive/send different wireless signals, so that structural space of the wearable device can be saved, a weight of the wearable device can be reduced, and a structure design can be simplified, thereby improving aesthetics of the wearable device.

In an implementation of the first aspect, the wearable device includes the first communication module; the first communication module is configured to: establish a communication connection to an external device under control of the processor, and receive key information of a BeiDou short packet service from the external device; and the processor is configured to control, based on the key information, the short packet unit in the BeiDou communication module to receive/send the BeiDou short packet by using the antenna radiator.

In this solution, the key information is obtained from the external device by using the first communication module, so that the wearable device can obtain the key information and implement the BeiDou short packet function without a built-in subscriber identity module and a built-in modem (modem). In this way, a design of the wearable device can be simplified, a volume, a weight, and power consumption of the wearable device can be reduced, a waterproof and dustproof level, availability, and usability of the wearable device can be improved, and an operating temperature range of the subscriber identity module (for example, an operating temperature range of a physical SIM card in a dedicated BeiDou terminal is usually above 0°C, and is not resistant to low temperature) can be avoided from affecting an operating temperature range (usually -20°C to +45°C) of the wearable device.

In an implementation of the first aspect, the wearable device includes the first communication module and a subscriber identity module, and both the first communication module and the subscriber identity module are electrically connected to the processor; the first communication module is configured to: establish a communication connection to an external device under control of the processor, and receive a configuration file of a BeiDou short packet service from the external device, where the configuration file includes key information of the BeiDou short packet service; the processor supports an ISO7816 protocol interaction function, and the processor is configured to write the configuration file into the subscriber identity module; and the processor is further configured to control, based on the key information in the configuration file, the short packet unit in the BeiDou communication module to receive/send the BeiDou short packet by using the antenna radiator.

In this solution, the processor supports the ISO7816 protocol interaction function. The processor can simulate a modem (the processor may be used as a "soft modem"), directly connect to a hardware electrical interface of the subscriber identity module, and interact with a software protocol. The processor supports functions such as user identity identification, authentication, statistics, and charging. Therefore, the wearable device does not need to have a built-in modem, so that internal space of the wearable device can be saved.

In an implementation of the first aspect, the wearable device includes the first communication module and a subscriber identity module, both the first communication module and the subscriber identity module are electrically connected to the processor, the first communication module supports electrical connection and software protocol interaction with the subscriber identity module by using the ISO7816 protocol, and the first communication module is configured to: establish a communication connection to an external device under control of the processor, and receive a configuration file of a BeiDou short packet service from the external device, where the configuration file includes key information of the BeiDou short packet service; the processor is configured to write the configuration file into the subscriber identity module; and the processor is further configured to control, based on key information in the configuration file, the short packet unit in the BeiDou communication module to receive/send the BeiDou short packet by using the antenna radiator. In this solution, the processor may be a conventional processor without a design change. The solution is mature and a software design is easy.

In an implementation of the first aspect, the first communication module is configured to: establish a communication connection to the external device under control of the processor, and receive user-defined information from the external device; and the BeiDou short packet sent by the antenna radiator carries the user-defined information.

In this solution, the user-defined information is information edited and entered by the user. The user can edit the user-defined information on another external device that is convenient for entering. The wearable device may receive the user-defined information from the external device by using the first communication module, and send the received user-defined information in a form of a BeiDou short packet. In this solution, a disadvantage that an operation interface of a wearable device is small and is inconvenient for entering can be overcome, so that a user can edit information on an external device that is convenient for entering, and send the information by using the BeiDou short packet. In addition, more personalized information can be transmitted to the outside by using the BeiDou short packet. In conclusion, this solution can improve user experience.

In an implementation of the first aspect, the wearable device includes a universal serial bus interface; the universal serial bus interface is configured to: connect to an external device and receive key information of a BeiDou short packet service from the external device; and the processor is configured to control, based on the key information, the short packet unit in the BeiDou communication module to receive/send the BeiDou short packet by using the antenna radiator.

In this solution, the key information is obtained from the external device by using the universal serial bus interface, so that the wearable device does not need to have a built-in subscriber identity module or a built-in modem (modem), and in particular, can obtain the key information and implement the BeiDou short packet function without a need to design an antenna specially used for communicating with the external device. In this way, a design of the wearable device can be simplified, a volume, a weight, and power consumption of the wearable device can be reduced, a waterproof and dustproof level, availability, and usability of the wearable device can be improved, and an operating temperature range of the subscriber identity module (for example, an operating temperature range of a physical SIM card in a dedicated BeiDou terminal is usually above 0°C, and is not resistant to low temperature) can be avoided from affecting an operating temperature range (usually -20°C to +45°C) of the wearable device.

In an implementation of the first aspect, the universal serial bus interface is further configured to: connect to the external device, and receive user-defined information from the external device; and the BeiDou short packet sent by the antenna radiator carries the user-defined information.

In this solution, the user-defined information is information edited and entered by the user. The user can edit the user-defined information on another external device that is convenient for entering. The wearable device may receive the user-defined information from the external device by using the universal serial bus interface, and send the received user-defined information in a form of a BeiDou short packet. In this solution, a disadvantage that an operation interface of a wearable device is small and is inconvenient for entering can be overcome, so that a user can edit information on an external device that is convenient for entering, and send the information by using the BeiDou short packet. In addition, more personalized information can be transmitted to the outside by using the BeiDou short packet. In conclusion, this solution can improve user experience.

In an implementation of the first aspect, the wearable device includes a physical sign monitoring module, and the physical sign monitoring module is configured to collect a physical sign parameter under control of the processor; and the BeiDou short packet sent by the antenna radiator carries the physical sign parameter.

In this solution, the physical sign monitoring module is configured to monitor a physical sign parameter of the user of the wearable device, for example, at least one of blood pressure, a blood flow rate, body temperature, a heart rate, blood oxygen, electrocardiogram, a cardiopulmonary sound, a respiratory rate, skin water content, a falling state/a trembling state, and the like. The physical sign monitoring module includes but is not limited to at least one of an airbag and an air pump, a body temperature sensor, a photoelectric sensor (for example, a photoelectric sensor that measures a heart rate by using a photoplethysmograph (photoplethysmograph, PPG) technology), a blood oxygen sensor, a bioimpedance sensor, an electrocardiogram sensor, a gyroscope, an acceleration sensor, and the like. In this solution, the BeiDou short packet carries the physical sign parameter, so that physical sign parameter information can be transmitted to the outside, and the outside can learn a life state or an activity state of the user, to facilitate decision-making.

In an implementation of the first aspect, the wearable device includes a natural environment monitoring module, and the natural environment monitoring module is configured to collect a natural environment parameter under control of the processor; and the BeiDou short packet sent by the antenna radiator carries the natural environment parameter.

In this solution, the natural environment monitoring module is configured to monitor a parameter of a natural environment in which the wearable device is located, for example, at least one of temperature, humidity, a wind speed, a height, a water depth, an ultraviolet intensity, an ambient light intensity, a CO₂ concentration, atmospheric pressure, a geomagnetic field, a sound, and the like. The natural environment monitoring module includes but is not limited to at least one of a temperature sensor, a barometer, an altimeter, an ambient light sensor, a geomagnetic sensor, a gas sensor, and the like.

In this solution, the BeiDou short packet carries the natural environment parameter, so that natural environment parameter information can be transmitted to the outside, and the outside can learn the natural environment in which the user is located, to facilitate decision-making.

According to a second aspect, an embodiment of this application provides a BeiDou short packet sending method, where the sending method is applied to any one of the foregoing wearable devices, and the sending method includes: When receiving an input signal and/or when determining that a current environment meets a trigger condition, a processor of the wearable device controls the short packet unit in the BeiDou communication module to send a BeiDou short packet by using the antenna radiator.

In this solution, the input signal may be a signal generated by a human-computer interaction module of the wearable device in response to a user operation, and the input signal is used to trigger a BeiDou short packet function. The human-computer interaction module includes but is not limited to a display, a button, a microphone, and the like. The current environment may include at least one of a working status of the wearable device, a current moment, a parameter of a natural environment in which the wearable device is located, and a physical sign parameter of a user wearing the wearable device. The trigger condition is a rule that is set in the wearable device, that can be fixed or customized, and that is used to trigger the BeiDou short packet function.

In this solution, the BeiDou short packet is triggered by the input signal, and/or the BeiDou short packet is triggered by a current environment that meets the trigger condition, so that the wearable device can perform emergency communication with the outside by using a BeiDou navigation system through a mechanism in which a user manually sends the BeiDou short packet and/or the BeiDou short packet is automatically sent.

In an implementation of the second aspect, the current environment includes at least one of a network environment, a current moment, a natural environment parameter, and a physical sign parameter, and the network environment includes a signal strength of a cellular network and/or a signal strength of a BeiDou satellite network; when the current environment is the network environment, the trigger condition includes the following condition: Duration in which the signal strength of the cellular network is less than a signal strength threshold exceeds specified duration, and/or duration in which the signal strength of the BeiDou satellite network is less than a signal strength threshold exceeds specified duration; when the current environment is the current moment, the trigger condition includes the following condition: The current moment is a specified moment; and when the current environment is the natural environment parameter and/or the physical sign parameter, the trigger condition includes the following condition: A deviation between the natural environment parameter and/or the physical sign parameter and a specified value exceeds a threshold.

In this solution, a mechanism for automatically sending the BeiDou short packet is constructed by determining whether the network environment, the current moment, the natural environment parameter, and the physical sign parameter meet the corresponding trigger condition. In this solution, it can be ensured that the wearable device can perform emergency communication with the outside in several scenarios, thereby improving availability of the wearable device in a plurality of scenarios.

In an implementation of the second aspect, that the short packet unit in the BeiDou communication module is controlled to send the BeiDou short packet by using the antenna radiator includes: controlling, according to a sending policy, the short packet unit in the BeiDou communication module to send the BeiDou short packet by using the antenna radiator, where the sending policy includes: when a quantity of remaining BeiDou short packets that can be sent is less than a threshold, and/or when remaining power of the wearable device is less than a threshold, selecting a BeiDou short packet with a highest priority in a BeiDou short packet list for sending; or reassembling and sending a BeiDou short packet in a BeiDou short packet list; or sending a BeiDou short packet selected by a user from a BeiDou short packet list.

In this solution, reassembling includes but is not limited to semantic extraction and enrichment, word tailoring, and extracting a plurality of keywords to combine into one BeiDou short packet. In this solution, the BeiDou short packet is sent according to the preset sending policy, so that power of the device can be saved when the BeiDou short packet is sent, and continuous availability of the device can be ensured.

In an implementation of the second aspect, the sending method includes: The processor determines, based on the remaining power of the wearable device and energy consumption in receiving/sending the BeiDou short packet, the quantity of the remaining BeiDou short packets that can be sent.

In this solution, the quantity of the remaining BeiDou short packets that can be sent can be properly and accurately determined, thereby helping save power of the device when the BeiDou short packet is sent, and ensuring continuous availability of the device.

In an implementation of the second aspect, that the short packet unit in the BeiDou communication module is controlled to send the BeiDou short packet by using the antenna radiator includes: controlling, according to a sending policy, the short packet unit in the BeiDou communication module to send the BeiDou short packet by using the antenna radiator, where the sending policy includes: when a status indicated by the physical sign parameter, the natural environment parameter, and/or power information of the wearable device is a safe state, first buffering a to-be-sent BeiDou short packet, and when it is detected that the user operates the wearable device, sending the buffered BeiDou short packet; or when a status indicated by the physical sign parameter, the natural environment parameter, and/or power information of the wearable device is an unsafe state, directly sending the BeiDou short packet.

In this solution, the BeiDou short packet is sent according to the preset sending policy, so that power of the device can be saved when the BeiDou short packet is sent, and continuous availability of the device can be ensured.

In an implementation of the second aspect, the BeiDou short packet sent by the antenna radiator carries at least one of the natural environment parameter, the physical sign parameter, preset information, and user-defined information.

In this solution, the preset information may be information set in the wearable device in advance. For example, the preset information may be emergency description or rescue information, for example, information about an emergency, a life threat, a shortage of spare materials, helping another rescued object seek rescue, performing a special movement or activity (such as diving, boating, sailing, mountain climbing, rock climbing, off-road, adventure, skiing, wing-mounted flight, aviation driving, or parachute jumping), and the like. The user-defined information is information edited and entered by the user. The user may edit the user-defined information on another external device (for example, an external device having a large input interface, such as a mobile phone or a tablet computer) that is convenient for entering. The wearable device may receive the user-defined information from the external device by using another communication module, and send the received user-defined information in a form of a BeiDou short packet.

In this solution, the BeiDou short packet carries information such as the natural environment parameter, the physical sign parameter, the preset information, and the user-defined information, so that the foregoing information can be transmitted to the outside, and the outside can learn a plurality of types of information of the user, to make an accurate and sufficient decision.

According to a third aspect, an embodiment of this application provides a wearable device, including a processor and a non-transitory computer-readable storage medium, where the non-transitory computer-readable storage medium is coupled to the processor and stores a program that is executed by the processor, and when the program is executed by the processor, the wearable device is enabled to perform any one of the foregoing sending methods.

In this solution, the wearable device can communicate with the outside by using a BeiDou navigation system, so that the wearable device can be further used in an emergency communication scenario.

According to a fourth aspect, an embodiment of this application provides a non-transitory computer-readable storage medium, including program code, where when the program code is executed by a computer device, the program code is used to perform any one of the foregoing sending methods.

In this solution, a device configured with the non-transitory computer-readable storage medium can communicate with the outside by using a BeiDou navigation system, so that the device can be used in an emergency communication scenario.

According to a fifth aspect, an embodiment of this application provides a chip, including a processor, configured to: invoke a computer program from a memory and run the computer program, so that a device on which the chip is installed performs any one of the foregoing sending methods.

In this solution, a device configured with the chip can communicate with the outside by using a BeiDou navigation system, so that the device can be used in an emergency communication scenario.

### BRIEF DESCRIPTION OF DRAWINGS

FIG. 1 is a schematic block diagram of a structure of a wearable device according to an embodiment of this application;
FIG. 1a is a schematic block diagram of a principle circuit of a multiplexing design of an antenna radiator of a wearable device according to an embodiment of this application;
FIG. 2 is a schematic diagram of a three-dimensional structure of a wearable device according to Embodiment 1 of this application;
FIG. 3 is a schematic diagram of an exploded structure of the wearable device in FIG. 2;
FIG. 4 is a schematic diagram of a three-dimensional structure of a housing of the wearable device in FIG. 3;
FIG. 5 is a schematic diagram of a partially enlarged structure at A in FIG. 4;
FIG. 6 is a schematic diagram of a three-dimensional structure of a first adapter of the wearable device in FIG. 3;
FIG. 7 is a schematic diagram of a three-dimensional structure of a rotating shaft of the wearable device in FIG. 3;
FIG. 8 is a schematic diagram of a three-dimensional structure of a limiting fastener of the wearable device in FIG. 3;
FIG. 9 is a schematic diagram of a three-dimensional structure of an antenna radiator of the wearable device in FIG. 3;
FIG. 10 is a schematic diagram of flipping an antenna radiator of the wearable device in FIG. 2 relative to a housing;
FIG. 11 is a schematic diagram of a partially enlarged structure at B in FIG. 10;
FIG. 12 is a schematic diagram of a structure of the wearable device in FIG. 10 from another perspective;
FIG. 13 is a schematic diagram of a partially enlarged structure at C in FIG. 12;
FIG. 14 is another schematic diagram of flipping an antenna radiator of the wearable device in FIG. 2 relative to a housing;
FIG. 15 is a schematic diagram of a user interface of a wearable device according to an embodiment of this application;
FIG. 16 is a schematic diagram of another user interface of a wearable device according to an embodiment of this application;
FIG. 17 is a schematic diagram of another user interface of a wearable device according to an embodiment of this application;
FIG. 18 is a schematic diagram of another user interface of a wearable device according to an embodiment of this application;
FIG. 19 is a top view of a structure of a wearable device according to Embodiment 2 of this application;
FIG. 20 is a schematic diagram of an exploded structure of the wearable device in FIG. 19;
FIG. 21 is a schematic diagram of a cross-sectional structure of a housing that is of the wearable device in FIG. 20 and that is cut along an E-E section;
FIG. 22 is a schematic diagram of a partially enlarged structure at F in FIG. 21;
FIG. 23 is a schematic diagram of a three-dimensional structure of an antenna radiator of the wearable device in FIG. 20;
FIG. 24 is a schematic diagram of a D-D cross-sectional structure of the wearable device in FIG. 19;
FIG. 25 is a schematic diagram of a partially enlarged structure at G in FIG. 24;
FIG. 26 is a schematic diagram of a cross-sectional structure of a wearable device according to Embodiment 3 of this application;
FIG. 27 is a top view of a structure of a wearable device according to Embodiment 4 of this application;
FIG. 28 is another top view of a structure of a wearable device according to Embodiment 4 of this application;
FIG. 29 is a schematic diagram of a three-dimensional structure of a wearable device according to Embodiment 5 of this application;
FIG. 30 is a schematic diagram of a cross-sectional structure of the wearable device in FIG. 29;
FIG. 31 is a schematic diagram of another user interface of a wearable device according to an embodiment of this application;
FIG. 32 is a schematic diagram of another user interface of a wearable device according to an embodiment of this application; and
FIG. 33A and FIG. 33B are a schematic block flowchart of a BeiDou short packet sending mechanism according to an embodiment of this application.

### DESCRIPTION OF EMBODIMENTS

The BeiDou satellite navigation system does not have signal blind spots in China. It can still maintain communication with the outside world even when a conventional communication means fail. Satellites in the BeiDou satellite navigation system include a positioning satellite and a short packet satellite, where the short packet satellite has a BeiDou short packet communication function. BeiDou short packet communication is widely used because it is not restricted by time, region, terrain, and weather, especially in emergency communication.

The following embodiments of this application provide a wearable device that can communicate with a BeiDou short packet satellite, and receive/send a BeiDou short packet. The wearable device includes but is not limited to a smart watch, an electrosphygmomanometer, a smart band, a smart helmet, smart clothing, smart glasses, a headset, a sound box, mobile Wi-Fi, a bracelet, a ring, a watchband, a cane, a smart backpack, a loss prevention device, a finding device, pet supplies, animal supplies, and the like. The wearable device in the following may be, for example, a smart watch.

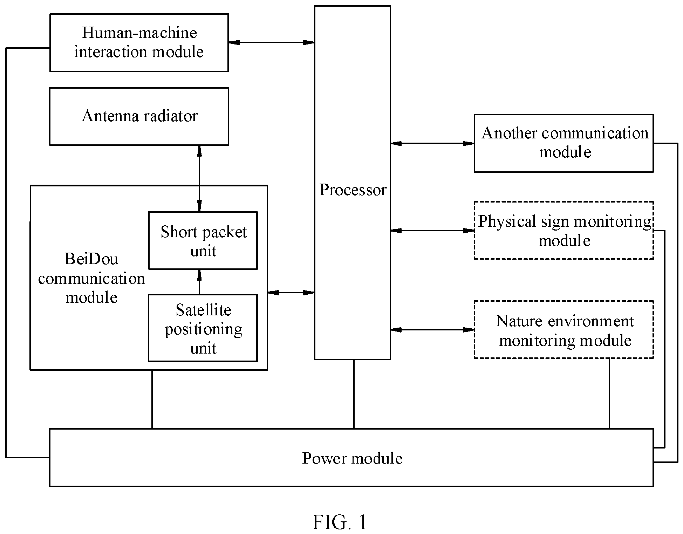

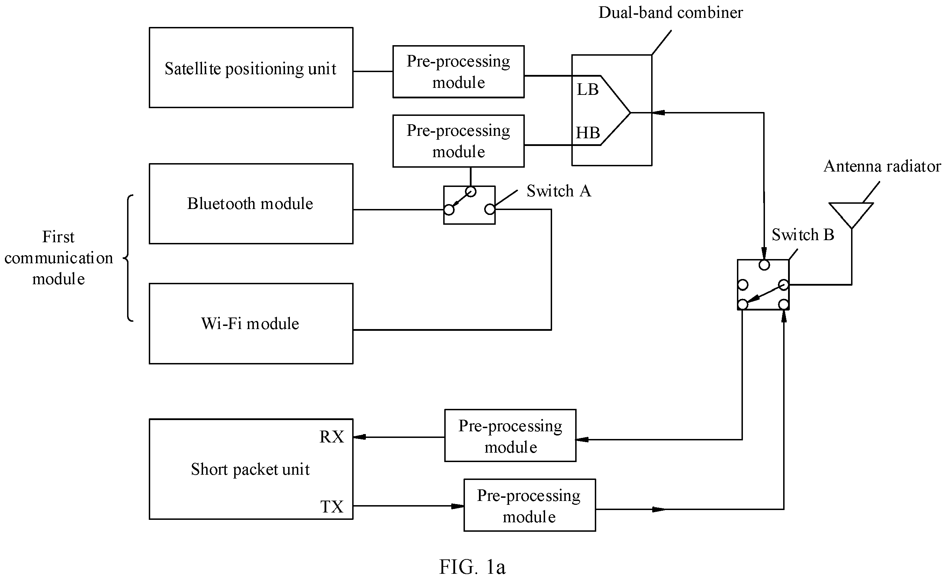

FIG. 1 is a schematic block diagram of a function structure of a wearable device according to an embodiment of this application. As shown in FIG. 1, the wearable device may include a BeiDou communication module, an antenna radiator, another communication module, a physical sign monitoring module, a natural environment monitoring module, a human-computer interaction module, a processor, and a power module. The BeiDou communication module, the another communication module, the physical sign monitoring module, the natural environment monitoring module, and the human-computer interaction module are all electrically connected to the processor, and the first five modules all work according to instructions of the processor. The antenna radiator is electrically connected to the BeiDou communication module.

The BeiDou communication module has a BeiDou short packet receiving and sending function, and can implement communication between the wearable device and a BeiDou short packet satellite. The BeiDou communication module can exchange, with the processor, user authentication information, short packet payload information, and protocol information that needs to be processed by the processor.

In an implementation of this embodiment of this application, the BeiDou communication module may include a short packet unit and a satellite positioning unit, and the short packet unit and the satellite positioning unit may be integrated into one module. Both the short packet unit and the satellite positioning unit are electrically connected to the antenna radiator, and the short packet unit and the satellite positioning unit may share a same antenna radiator to receive/send a signal or receive a signal (that is, the short packet unit and the satellite positioning unit multiplex the antenna radiator). A principle of multiplexing the antenna radiator by the short packet unit and the satellite positioning unit is described below.

In an implementation of this embodiment of this application, under control of the processor, the satellite positioning unit can obtain a timing signal and global positioning information from the positioning satellite by using the antenna radiator. The satellite positioning unit may further send the timing signal and the global positioning information to the short packet unit. The positioning satellite includes but is not limited to a global positioning system (global positioning system, GPS) satellite, a Galileo satellite navigation system (Galileo satellite navigation system) satellite, a GLONASS (global navigation satellite system, GLONASS) satellite, and a BeiDou navigation satellite system (BeiDou navigation satellite system, BDS) positioning satellite. The timing signal is used for the short packet unit to perform clock synchronization. The global positioning information may be used to locate a location of a user, and the global positioning information may be included in a BeiDou short packet (which is described below), or may be used in a daily application scenario (for example, positioning in a step counting exercise). The implementation solution is mature, and it is easy to implement component stacking and a circuit design of the wearable device.

Alternatively, in another implementation of this embodiment of this application, the satellite positioning unit may obtain global positioning information, but does not obtain a timing signal, where the timing signal is obtained by the short packet unit (described below).

The short packet unit is configured to: obtain, under control of the processor by multiplexing the antenna radiator, a clock signal from the short packet satellite in the BeiDou satellite navigation system, and perform clock synchronization based on the clock signal and the timing signal obtained by the satellite positioning unit. Alternatively, the short packet unit can multiplex the antenna radiator to obtain a timing signal from the positioning satellite, and perform clock synchronization based on the clock signal and the timing signal obtained by the short packet unit. The latter short packet unit is a new BeiDou communication module.

After clock synchronization is completed, the short packet unit may receive/send the BeiDou short packet by using the antenna radiator. In an implementation, the BeiDou short packet received/sent by the short packet unit may carry the global positioning information, and the global positioning information may be used to locate a location of a user. This implementation is mainly used in emergency communication scenarios such as active safety reporting and emergency rescue. In these scenarios, short packets need to carry location information to implement the function.

In another implementation, the BeiDou short packet received/sent by the short packet unit may not include the global positioning information. The implementation is mainly used to save a payload, and some BeiDou packets may be selected to carry no location information. In the implementation, when the short packet unit obtains the timing signal by itself, the satellite positioning unit may not be disposed. In this solution in which no satellite positioning unit is disposed, circuit integration of the wearable device can be improved, a circuit design can be simplified, structural space of the wearable device can be saved, and a weight of the wearable device can be reduced.

For example, the short packet unit may include a baseband circuit and a radio frequency circuit. The baseband circuit can be used to capture, trace, and decode a BeiDou satellite, manage a protocol stack, manage radio frequency transmission and reception links, and adapt to an interface of the processor. The radio frequency circuit may be configured to: receive/send, filter, and amplify a radio frequency signal.

In another implementation in this embodiment of this application, the short packet unit and the satellite positioning unit are both independent modules, and may not be integrated.

The another communication module is configured to enable the wearable device to communicate with an external device (for example, a general-purpose communication device such as a mobile phone, a tablet computer, or a wearable device, or a dedicated BeiDou terminal). The external device may have a subscriber identity module (which may include a physical subscriber identity module (subscriber identity module, SIM) card and an embedded SIM (Embedded-SIM) card, and this is the same below) that supports a BeiDou short packet function. The external device may register and enable a BeiDou short packet service by using a normal channel and process, to obtain and store key information required for user identity identification and authentication. The another communication module may further be configured to enable the wearable device to perform wireless communication with a base station and another satellite other than the BeiDou satellite.

In this embodiment of this application, the another communication module may include at least one of a first communication module and a universal serial bus (universal serial bus, USB) interface.

The first communication module refers to another wireless communication module other than the BeiDou communication module. The first communication module includes but is not limited to at least one of another satellite communication module (such as a GPS communication module), a mobile communication module (for example, a 2G mobile communication module, a 3G mobile communication module, a 4G mobile communication module, or the like), a Wi-Fi module, a Bluetooth module, an NFC module, an infrared (infrared, IR) module, or the like. A communication manner that can be implemented by the first communication module includes but is not limited to at least one of other satellite communication, mobile communication, Wi-Fi communication, Bluetooth communication, NFC communication, infrared communication, and the like.

In an implementation, the first communication module and the BeiDou communication module may share a same antenna radiator, the first communication module is also electrically connected to the antenna radiator, and the first communication module multiplexes the antenna radiator to receive/send a first network signal, to implement wireless communication with an external device. The first network signal is a wireless signal corresponding to the first communication module. For example, the first network signal may be at least one of another satellite signal, a mobile communication signal, a Wi-Fi signal, a Bluetooth signal, an NFC signal, an infrared signal, or the like. A principle of multiplexing the antenna radiator by the first communication module and the BeiDou communication module is described below.

Alternatively, in another implementation, the wearable device may have an antenna radiator that is independent of a BeiDou antenna radiator and that is specially configured to: receive/send the first network signal. The antenna radiator is electrically connected to the first communication module, and the first communication module receives/sends the first network signal by using the antenna radiator, to implement wireless communication with the external device.

The USB interface may be detachably connected to the external device. After the USB interface is connected to the external device, the wearable device performs wired communication with the external device by using the USB interface, and the wearable device may not need to be configured with the antenna radiator that is specially configured to receive/send the first network signal (which is further described below).

In Implementation 1 of this embodiment of this application, the processor may control the another communication module to establish a communication connection to the external device. For example, a wireless communication connection may be established with the external device by using the first communication module. For example, a cloud may be used to manage biding of a user account to the device, and a secure and trusted communication connection may be established in a device pairing manner. Alternatively, a wired communication connection may be established with the external device by using the USB interface.

After the communication connection is established, the processor may control the another communication module to obtain and update key information of the BeiDou short packet service from the external device. The processor may store the key information in a secure storage area of the wearable device, so that the key information can be invoked at any time or as required. The secure storage area may be storage space in the processor, or storage space in a dedicated memory, or storage space of another component (for example, a storage area of an NFC chip) is reused. The process of dumping the key information may be triggered and executed as required, or may be periodically executed as planned, to ensure correctness and validity of the key information. When required, the processor may control, based on the key information in the secure storage area, the BeiDou communication module to receive/send the BeiDou short packet by using the antenna radiator. In this way, the wearable device can independently communicate with the BeiDou satellite based on the key information and without being connected to an external device.

In addition, in Implementation 1, the processor may further control the another communication module to establish the communication connection to the external device, to obtain user-defined information from the external device, for example, receive the user-defined information from the external device in a wired communication or wireless communication manner. The processor may further control the BeiDou communication module to send the user-defined information in a form of a BeiDou short packet (which is further described below).

In the solution of Implementation 1, the wearable device can implement the BeiDou short packet function without a built-in subscriber identity module (a physical SIM card or an eSIM) and a built-in modem (modem). Particularly, when the wearable device obtains the key information (and may further obtain the user-defined information) from the external device by using the USB interface, the wearable device may further not need a built-in antenna radiator that is specially configured to: receive/send the first network signal. In this way, a design of the wearable device can be simplified, a volume, a weight, and power consumption of the wearable device can be reduced, a waterproof and dustproof level, availability, and usability of the wearable device can be improved, and an operating temperature range of the subscriber identity module (for example, an operating temperature range of a physical SIM card in a dedicated BeiDou terminal is usually above 0°C, and is not resistant to low temperature) can be avoided from affecting an operating temperature range (usually -20°C to +45°C) of the wearable device.

Different from the foregoing Implementation 1, in Implementation 2 of this embodiment of this application, the wearable device may include both the first communication module and the subscriber identity module (the physical SIM card or the eSIM). The processor may control the first communication module to establish a communication connection with an external device, and receive a configuration file of a BeiDou short packet service from the external device, where the configuration file includes key information of the BeiDou short packet service. The processor can write the configuration file into the subscriber identity module, so that the subscriber identity module can implement functions such as user identity identification, authentication, statistics, and charging. The processor can control, based on the key information in the configuration file, the BeiDou communication module to receive/send the BeiDou short packet by using the antenna radiator. The processor in Implementation 2 supports an ISO 7816 protocol interaction function. The processor can simulate a modem (the processor may be used as a "soft modem"), directly connect to a hardware electrical interface of the subscriber identity module, and interact with a software protocol. The processor supports functions such as user identity identification, authentication, statistics, and charging. The wearable device in Implementation 2 does not need to have a built-in modem, so that internal space of the wearable device can be saved.

Different from the foregoing Implementation 1, in Implementation 3 of this embodiment of this application, the wearable device may include both the first communication module and the subscriber identity module (the physical SIM card or the eSIM). The first communication module may include a modem, and the modem supports electrical connection and software protocol interaction with the subscriber identity module by using the ISO 7816 protocol. The processor may control the first communication module to establish a communication connection with an external device, and receive a configuration file of a BeiDou short packet service from the external device, where the configuration file includes key information of the BeiDou short packet service. The processor can write the configuration file into the subscriber identity module, and control, based on the key information in the configuration file, the BeiDou communication module to receive/send the BeiDou short packet by using the antenna radiator. The processor in Implementation 3 may be a conventional processor without a design change. The solution in Implementation 3 is mature and a software design is easy.

In an implementation of this embodiment of this application, the antenna radiator may be a BeiDou antenna radiator. The antenna radiator is configured to convert a radio frequency signal generated by the short packet unit in the BeiDou communication module into an electromagnetic wave signal, and radiate the electromagnetic wave signal to the BeiDou satellite. The antenna radiator is further configured to: receive an electromagnetic wave signal from the BeiDou satellite, convert the electromagnetic wave signal into a radio frequency signal, and transmit the radio frequency signal to the satellite positioning unit and/or the short packet unit in the BeiDou communication module.

In another implementation of this embodiment of this application, the antenna radiator may be multiplexed as a BeiDou antenna radiator and another antenna radiator. In a multiplexing manner, the antenna radiator may receive/send a BeiDou signal (including a signal received by the satellite positioning unit and a BeiDou short packet signal received/sent by the short packet unit), and further receive/send the first network signal. "Multiplexing" includes but is not limited to: performing time division multiplexing on one antenna radiator by using a software design and/or a switch circuit, to separately receive/send the BeiDou signal and the first network signal at different moments; or performing frequency division multiplexing on one antenna radiator, to separately receive/send the BeiDou signal and the first network signal at a same moment.

With reference to FIG. 1a, the following schematically describes a specific principle of multiplexing the antenna radiator as a BeiDou antenna radiator and another antenna radiator, and also describes a specific principle of multiplexing the antenna radiator by the satellite positioning unit and the short packet unit in the BeiDou communication module.

In this embodiment of this application, a frequency of a signal received by the satellite positioning unit may be 1.6 GHz, frequencies of signals received/sent by the Bluetooth module and the Wi-Fi module may both be 2.4 GHz, a frequency of a BeiDou short packet signal received by the short packet unit may be 2.4 GHz, and a frequency of a BeiDou short packet signal sent by the short packet unit may be 1.6 GHz.

As shown in FIG. 1a, the satellite positioning unit is electrically connected to an input end LB (which may be referred to as a low frequency input end) of a dual-band combiner by using a pre-processing module. The Bluetooth module and the Wi-Fi module are electrically connected to two movable ends (similar to a movable contact, and this is the same below) of a switch A (for example, may be a two-in-one switch), and a non-movable end (similar to a static contact, and this is the same below) of the switch A may be electrically connected to an input end HB (which may be referred to as a high-frequency input end) of the dual-band combiner by using the preprocessing module. An output end of the dual-band combiner may be electrically connected to one movable end of a switch B (for example, may be a four-in-one switch). A receive end RX of the short packet unit may be electrically connected to another movable end of the switch B by using the pre-processing module, and a transmit end TX of the short packet unit may be electrically connected to another movable end of the switch B by using the pre-processing module. A non-movable end of the switch B is electrically connected to the antenna radiator. The pre-processing module is configured to perform pre-processing (or referred to as preprocessing) on a signal, including but not limited to at least one of filtering, amplification, and the like. The dual-band combiner is configured to combine input signals of two frequency bands for output.

As shown in FIG. 1a, the frequency (1.6 GHz) of the signal received by the satellite positioning unit is different from the frequency (2.4 GHz) of the signal received/sent by the Bluetooth module/Wi-Fi module. Therefore, the satellite positioning unit and the Bluetooth module/Wi-Fi module may implement frequency division multiplexing on the antenna radiator by using the dual-band combiner, so that the satellite positioning unit and the Bluetooth module/Wi-Fi module can share a same antenna radiator to receive a signal (for the satellite positioning unit) or receive/send a signal (for the Bluetooth module/Wi-Fi module) at a same moment. For the Bluetooth module and the Wi-Fi module, the frequencies of the signals received/sent by the Bluetooth module and the Wi-Fi module are the same, and the Bluetooth module and the Wi-Fi module may implement time division multiplexing on the antenna radiator by using the switch A, so that the Bluetooth module and the Wi-Fi module can share a same antenna radiator and separately receive/send signals at different moments.

For example, a status of the switch A shown in FIG. 1a may enable the Bluetooth module to be electrically connected to the dual-band combiner by using the switch A. Therefore, the Bluetooth module and the satellite positioning unit may implement frequency division multiplexing on the antenna radiator by using the dual-band combiner, so that the Bluetooth module and the satellite positioning unit can share a same antenna radiator to receive/send a signal or receive a signal at a same moment. According to FIG. 1a, it is easy to understand that when the switch A switches the status to electrically connect the Wi-Fi module to the dual-band combiner, the Wi-Fi module and the satellite positioning unit can implement frequency division multiplexing on the antenna radiator by using the dual-band combiner, so that the Wi-Fi module and the satellite positioning unit can share a same antenna radiator to receive/send a signal or receive a signal at a same moment.

As shown in FIG. 1a, frequencies of signals of the receive end RX and the transmit end TX of the short packet unit are different (for example, 2.4 GHz and 1.6 GHz respectively), and the receive end RX or the transmit end TX implements time division multiplexing on the antenna radiator by using the switch B. For example, a status of the switch B shown in FIG. 1a may enable the receive end RX to be electrically connected to the antenna radiator. Therefore, the short packet unit may receive the BeiDou short packet by using the antenna radiator. It is easy to understand according to FIG. 1a that, when the switch B switches the status to electrically connect the transmit end TX to the antenna radiator, the short packet unit may send the BeiDou short packet by using the antenna radiator.

In addition, the satellite positioning unit and the short packet unit may implement time division multiplexing on the antenna radiator by using the switch B. For example, at a moment shown in FIG. 1a, the status of the switch B may enable the short packet unit to receive the BeiDou short packet by using the antenna radiator, and the satellite positioning unit does not receive a signal. When the switch B switches the status at a moment to electrically connect the satellite positioning unit to the antenna radiator, the satellite positioning unit may receive global positioning information (or may receive a timing signal) by using the antenna radiator, and the short packet unit does not receive or send a signal. Similarly, the first communication module and the short packet unit also implement time division multiplexing on the antenna radiator by using the switch B.

It may be understood that FIG. 1a shows only the Bluetooth module and the Wi-Fi module in the first communication module, and this is not a limitation on the solution in this embodiment of this application. It is easy to understand that any type of first communication module is applicable to the foregoing circuit design principle. In addition, the dual-band combiner, the two-in-one switch, and the four-in-one switch shown in FIG. 1a are all examples. It is easy to understand that a proper circuit component may be designed based on a requirement, and is not limited to the foregoing description. For example, when more than two signals need to be combined, a multi-band combiner may be used; or a multi-in-one switch (such as a three-in-one switch or a five-in-one switch) may be used, and a corresponding quantity of modules or ports are connected by using the multi-in-one switch.

In conclusion, in the foregoing time division multiplexing and frequency division multiplexing manners, the first communication module and the BeiDou communication module may share a same antenna radiator to receive/send a signal, that is, the antenna radiator is multiplexed into a BeiDou antenna radiator and another antenna radiator. The satellite positioning unit and the short packet unit in the BeiDou communication module may multiplex the antenna radiator in a time division multiplexing manner, and the time division multiplexing manner can adapt to signal frequency band distribution of the satellite positioning unit and the short packet unit.

In this embodiment of this application, the satellite positioning unit and the short packet unit in the BeiDou communication module multiplex the antenna radiator, so that one antenna radiator can be used to receive or receive/send signals of different frequencies. In addition, structural space of the wearable device can be saved, a weight of the wearable device can be reduced, and a structure design can be simplified, thereby improving aesthetics of the wearable device. Similarly, the first communication module and the BeiDou communication module multiplex the antenna radiator, so that the foregoing technical effects can also be achieved.

The physical sign monitoring module is configured to monitor a physical sign parameter of a user of the wearable device, for example, at least one of blood pressure, a blood flow rate, body temperature, a heart rate, blood oxygen, an electrocardiogram, a cardiopulmonary sound, a respiratory rate, skin water content, a falling state/a trembling state, and the like. The physical sign monitoring module includes but is not limited to at least one of an airbag and an air pump, a body temperature sensor, a photoelectric sensor (for example, a photoelectric sensor that measures a heart rate by using a photoplethysmograph (photoplethysmograph, PPG) technology), a blood oxygen sensor, a bioimpedance sensor, an electrocardiogram sensor, a gyroscope, an acceleration sensor, and the like.

The processor performs data processing and storage on physical sign parameter information detected by the physical sign monitoring module, and may further transmit the physical sign parameter information to the outside by using the BeiDou communication module and/or the another communication module. When the processor determines that a sudden change or an abnormality (the sudden change or the abnormality may be determined based on a preset condition or threshold) occurs in a physical sign parameter, the processor may remind or warn the user by using the human-computer interaction module. The processor may further transmit related information to the outside by using the BeiDou communication module and/or the another communication module.

In another implementation in this embodiment of this application, the wearable device may not have the physical sign monitoring module.

The natural environment monitoring module is configured to monitor a parameter of a natural environment in which the wearable device is located, for example, at least one of temperature, humidity, a wind speed, a height, a water depth, an ultraviolet intensity, an ambient light intensity, a CO₂ concentration, atmospheric pressure, a geomagnetic field, a sound, and the like. The natural environment monitoring module includes but is not limited to at least one of a temperature sensor, a barometer, an altimeter, an ambient light sensor, a geomagnetic sensor, a gas sensor, and the like.

The processor performs data processing and storage on natural environment parameter information detected by the natural environment monitoring module, and may further transmit the natural environment parameter information to the outside by using the BeiDou communication module and/or the another communication module. When the processor determines that a sudden change or an abnormality (the sudden change or the abnormality may be determined based on a preset condition or threshold) occurs in a natural environment parameter, the processor may remind or warn the user by using the human-computer interaction module. The processor may further transmit related information to the outside by using the BeiDou communication module and/or the another communication module.

In another implementation in this embodiment of this application, the wearable device may not have the natural environment monitoring module.

The human-computer interaction module is configured to work under control of the processor, to implement human-computer interaction between the user and the wearable device. For example, the human-computer interaction module may include at least one of a display, a button, an electric acoustic device, a vibration motor, and the like. The display displays an image to the user, and may further respond to a touch control operation of the user. The key is used by the user to press, rotate, and/or pull, to respond to a user operation and trigger a corresponding function, for example, implement power-on and power-off, implement operation and control on each function item of the wearable device, and the like. The electric acoustic device includes but is not limited to a buzzer, a speaker, a microphone, and the like, and is configured to output audio or receive a user voice. The vibration motor is configured to provide vibration feedback to the user through vibration.

The power module is configured to supply power to the processor, the BeiDou communication module, the another communication module, the physical sign monitoring module, the natural environment monitoring module, the human-computer interaction module, and the like. The power module includes a rechargeable battery.

In an implementation of this embodiment of this application, the rechargeable battery may have a high discharge rate (the discharge rate is a current value required by the battery to discharge a rated capacity of the battery within a specified time, and is represented by a letter C). For example, 1C indicates a current required for discharging the battery power within one hour, and 2C indicates a current required for discharging the battery power within 0.5 hour. For example, the discharge rate can reach 8.5C. A discharge current of this rechargeable battery may reach about 3.5 A, and can meet a power consumption requirement of the wearable device having the BeiDou short packet function (the BeiDou short packet function has a high requirement on a power supply, and has large impact on battery energy consumption and battery endurance. According to a BeiDou short packet service specification, a wearable device needs to have a built-in high-power amplifier, and output power of the power amplifier is about 3 W to 5 W. Considering energy conversion efficiency of the power amplifier, power supply efficiency of the wearable device, and a power consumption requirement of another part of the wearable device, a power consumption requirement of the wearable device during sending of the BeiDou short packet may be close to or even exceed 10 W. The wearable device usually uses a rechargeable lithium battery with a minimum discharge voltage of about 3 V, which means that the discharge current of the battery reaches about 3.5 A).

In an implementation of this embodiment of this application, a capacity and a size of the rechargeable battery may be kept within a proper range. For example, the capacity of the rechargeable battery may be about 400 mAh to 450 mAh. Such a large capacity can meet a requirement of the BeiDou short packet function. The overall size of the rechargeable battery may be approximately 27.5 mm×26.25 mm×5.65 mm. Such a size does not affect a product size and appearance experience of the wearable device, and is light and convenient. Therefore, the capacity and the size of the rechargeable battery in this embodiment of this application can meet both the BeiDou short packet function of the wearable device and a wearable requirement.

In another implementation of this embodiment of this application, the rechargeable battery may be a conventional battery, and does not need to have the foregoing discharge rate, discharge current, capacity, and size design.

The following describes in detail specific structures of several wearable devices. It may be understood that the foregoing framework structure of the wearable device may be applicable to any specific wearable device described below.

### Embodiment 1

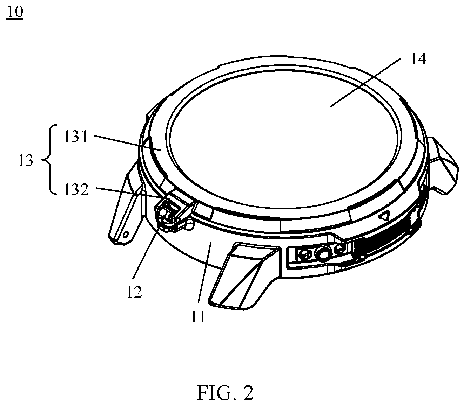

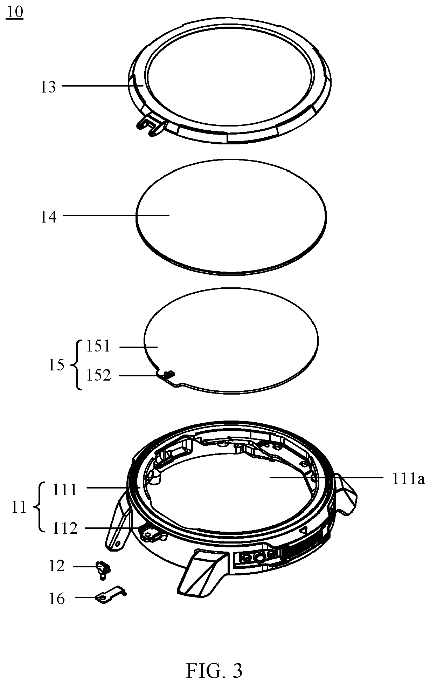

In Embodiment 1, as shown in FIG. 2 and FIG. 3, a wearable device 10 may include a housing 11, a circuit board assembly 15, a display 14, an antenna radiator 13, a rotating shaft 12, a first adapter 16, and a limiting fastener 17. The following provides descriptions one by one.

As shown in FIG. 3, the housing 11 may be approximately in a closed ring shape or a tubular shape, for example, may be used as a middle frame of a smart watch. The housing 11 may be made of a non-conductive material, for example, a plastic material.

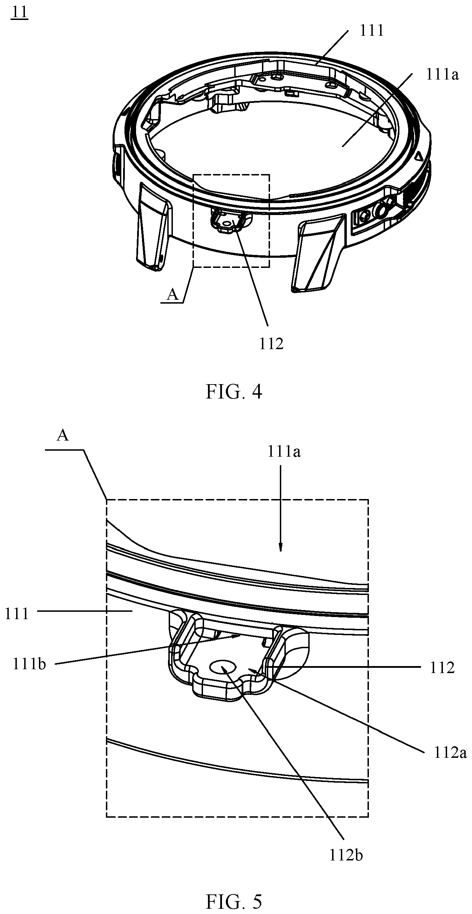

As shown in FIG. 3 and FIG. 4, the housing 11 may include a main part 111 and a lug part 112.

A shape of the main part 111 may be approximately a closed ring or a tubular shape, and the main part 111 forms installation space 111a through enclosing. The main part 111 may be provided with a first penetrating hole 111b, the first penetrating hole 111b is a through hole, and the first penetrating hole 111b connects an inner side and an outer side of the installation space 111a.

The lug part 112 is connected to an outer surface of the main part 111, and the lug part 112 is similar to an "ear" disposed on the main part 111. The lug part 112 may form an installation groove 112a through enclosing. For example, the installation groove 112a may have two opposite side walls, where the two side walls both protrude from the outer surface of the main part 111, and the two side walls may be respectively located on two sides of the first penetrating hole 1 1 1b, that is, the first penetrating hole 111b connects the installation space 111a and the installation groove 112a. A side that is of the lug part 112 and that is opposite to the outer surface of the main part 111 may have no side wall, so that the lug part 112 is approximately of a C-shaped structure. A shaft hole 112b (referred to as a second shaft hole 112b, which is different from a first shaft hole on the antenna radiator 13) is disposed on the lug part 112. The second shaft hole 112b may be a through hole, and the second shaft hole 112b may be disposed on a bottom wall of the installation groove 112a.

The foregoing structure of the housing 11 is merely an example, and this embodiment of this application is not limited thereto.

As shown in FIG. 3 and FIG. 4, both the circuit board assembly 15 and the display 14 are installed in the installation space 111a of the main part 111 of the housing 11. The main part 111 and the display 14 may jointly enclose the circuit board assembly 15, so that the circuit board assembly 15 is accommodated in the installation space 111a and cannot be seen by a user. All of the display 14 may be located in the installation space 111a, or a part of the display 14 may be exposed outside the installation space 111a. A display surface (a surface on which an image is displayed) of the display 14 may be exposed from an opening of the installation space 111a, so that the user can view the display surface.

In Embodiment 1, the circuit board assembly 15 may include an electronic component, and may further include a mechanical component that plays an auxiliary role (for example, positioning, bearing, heat dissipation, electromagnetic shielding, and electromagnetic interference prevention) for the electronic component. For example, as shown in FIG. 3, the circuit board assembly 15 may include a circuit board 151 and a spring 152, where the spring 152 is installed on the circuit board 151, and the spring 152 may be connected to a feedpoint on the circuit board 151. With reference to FIG. 2, the feedpoint may be located between the switch B and the antenna radiator, and is electrically connected to the non-movable end of the switch B. In other words, the feedpoint may be electrically connected to a satellite positioning unit and a short packet unit in a BeiDou communication module (when a first communication module and a BeiDou communication module multiplex the antenna radiator, the feedpoint may further be electrically connected to the first communication module). Therefore, the spring 152 may be electrically connected to the satellite positioning unit and the short packet unit in the BeiDou communication module (when the first communication module and the BeiDou communication module multiplex the antenna radiator, the spring 152 may further be electrically connected to the first communication module).

In addition to that shown in FIG. 3, the circuit board assembly 15 may further include another electronic component, for example, the processor, the BeiDou communication module, the another communication module, the subscriber identity module, the battery, the vibration motor, the buzzer, the speaker, the microphone, the storage module, the physical sign monitoring module, the natural environment monitoring module, and the like. At least some electronic components in the circuit board assembly 15 may be arranged on the circuit board 151. For a solution in which only some electronic components are arranged on the circuit board 151 and the other electronic components are not arranged on the circuit board 151, the other electronic components may be installed in a proper position in the housing 11.

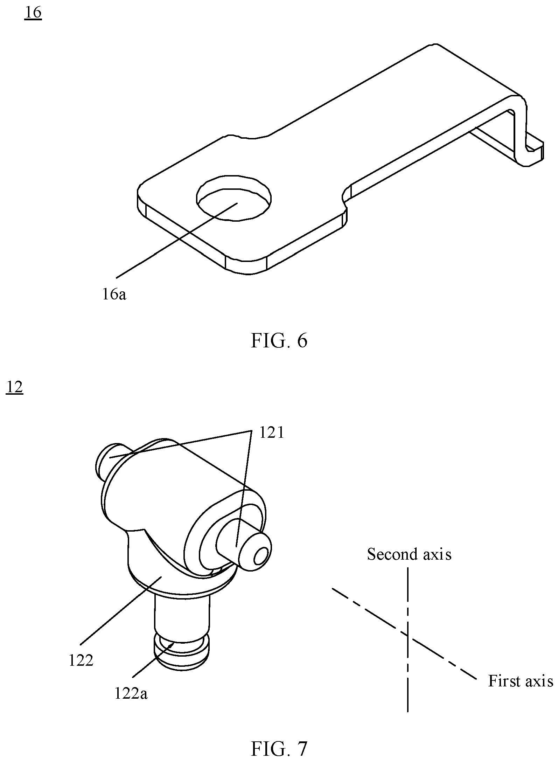

As shown in FIG. 6, the first adapter 16 may be in a bending shape, for example, approximately in an L-shaped bending shape. The first adapter 16 may be provided with a through hole 16a, and the through hole 16a may be located at an end part of the first adapter 16. The first adapter 16 may be made of a conductive material, for example, a metal material.

In Embodiment 1, the rotating shaft 12 is configured to enable the antenna radiator 13 to rotate relative to the housing 11. As shown in FIG. 7, the rotating shaft 12 may include a first rotating shaft 121 and a second rotating shaft 122, and the first rotating shaft 121 may be connected to an end of the second rotating shaft 122 (in FIG. 7, the first rotating shaft 121 is a cylindrical structure protruding from a surface of the second rotating shaft 122). The first rotating shaft 121 and the second rotating shaft 122 may be connected together.

The first rotating shaft 121 may be approximately cylindrical. There may be two first rotating shafts 121, the two first rotating shafts 121 are respectively located on two opposite sides of the second rotating shaft 122, and center lines of the two first rotating shafts 121 may coincide. The center line of the first rotating shaft 121 may be referred to as a first axis.

The second rotating shaft 122 may be approximately columnar, an end that is of the second rotating shaft 122 and that is away from the first rotating shaft 121 may be approximately cylindrical, and a central line of the end of the second rotating shaft 122 may be referred to as a second axis. The second axis may intersect the first axis, for example, the two may be orthogonal or substantially orthogonal. A limiting groove 122a may be disposed at the end that is of the second rotating shaft 122 and that is away from the first rotating shaft 121. The limiting groove 122a may be an annular groove, and the limiting groove 122a may surround the second axis for a whole circle.

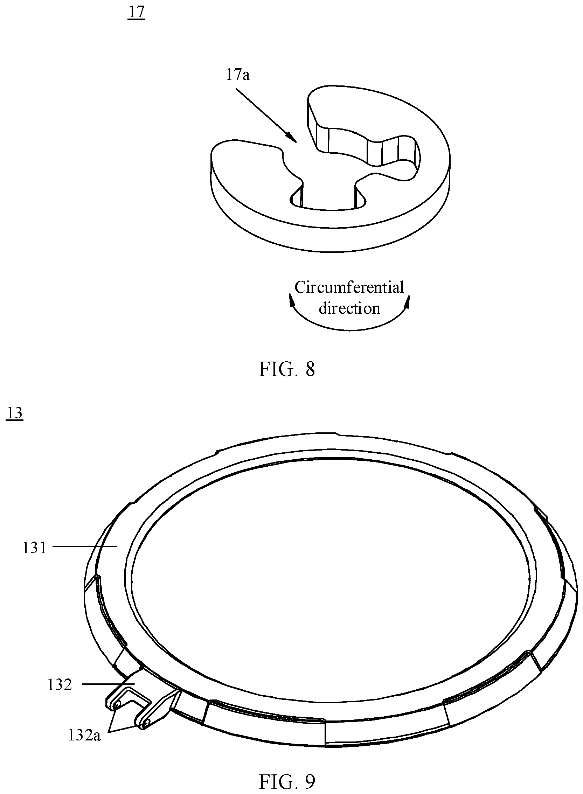

As shown in FIG. 8, a shape of the limiting fastener 17 may be approximately an annular structure with a notch 17a, and the limiting fastener 17 of this structure is easy to install and disassemble.

As shown in FIG. 9, the antenna radiator 13 may be approximately in a closed ring shape, and may be used as a bezel of the smart watch. The antenna radiator 13 may be made of a conductive material, for example, a metal material.

The antenna radiator 13 may include a frame 131 and a connection part 132, and the frame 131 and the connection part 132 may be connected together. In an implementation, the frame 131 may be basically in a closed ring shape, and forms a closed circular area through enclosing. In another implementation, the frame 131 may alternatively be approximately in an open ring structure, and the frame 131 forms an open area through enclosing. The connection part 132 is located outside the frame 131. The connection part 132 may be provided with a first shaft hole 132a, the first shaft hole 132a may be a through hole, and there may be two first shaft holes 132a.

The foregoing describes structures of components in the wearable device 10 one by one. The following describes an assembly design of the foregoing components.

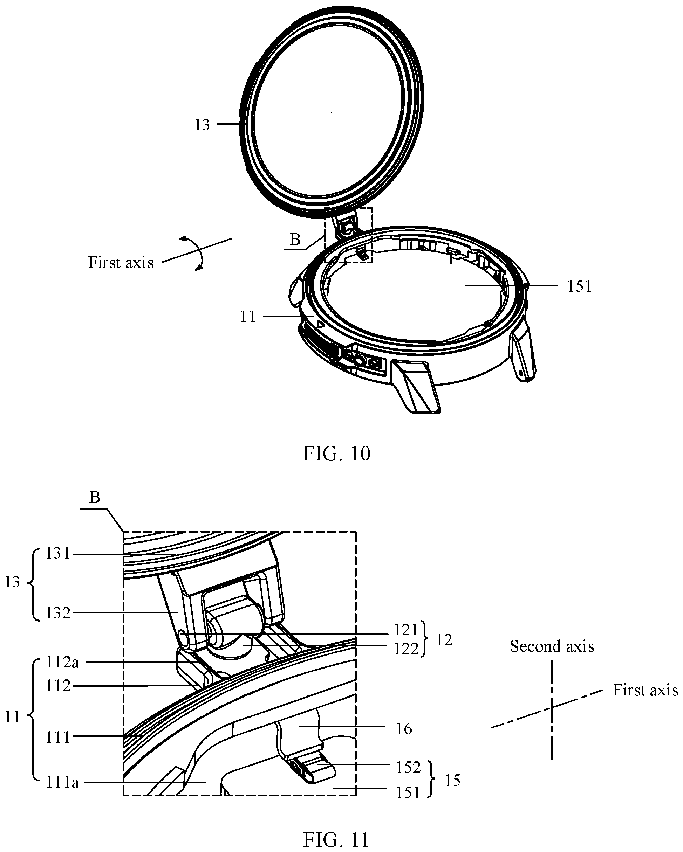

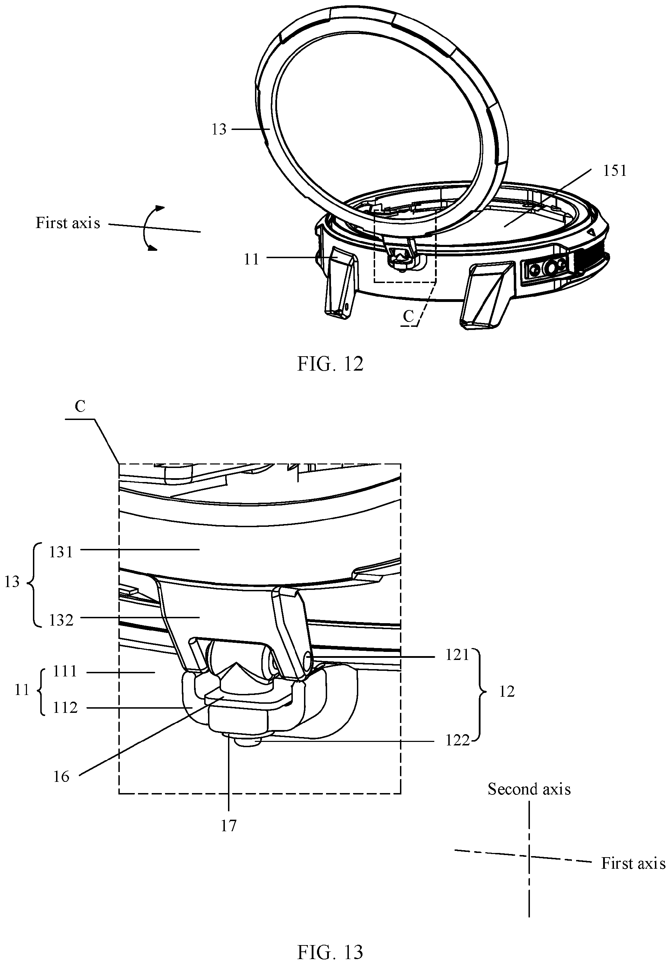

FIG. 10, FIG. 11, FIG. 12, and FIG. 13 show assembly structures of the housing 11, the first adapter 16, the rotating shaft 12, the limiting fastener 17, and the antenna radiator 13 in the wearable device 10. FIG. 11 is a schematic diagram of a locally enlarged structure at B in FIG. 10, and FIG. 13 is a schematic diagram of a locally enlarged structure at C in FIG. 12.

With reference to FIG. 11 and FIG. 5, the first adapter 16 may penetrate into the first penetrating hole 111b of the main part 111 of the housing 11. One end of the first adapter 16 may extend into the installation space 111a of the housing 11, and is connected to the spring 152. The other end that is of the first adapter 16 and that is opposite to the end may be located in the installation groove 112a of the lug part 112 of the housing 11, and the other end may be in contact with the bottom wall of the installation groove 112a.

With reference to FIG. 11, FIG. 6, and FIG. 5, the second rotating shaft 122 of the rotating shaft 12 may pass through the through hole 16a on the first adapter 16 and the second shaft hole 112b of the lug part 112, to be installed on the lug part 112, and the second rotating shaft 122 is in contact with the first adapter 16. In addition, the second rotating shaft 122, the through hole 16a, and the second shaft hole 112b are in rotation fitting, so that the second rotating shaft 122 can rotate around the second axis relative to the housing 11.

With reference to FIG. 13, FIG. 5, and FIG. 7, the second rotating shaft 122 of the rotating shaft 12 may extend to the outside of the second shaft hole 112b, and the limiting groove 122a on the second rotating shaft 122 may be exposed from the second shaft hole 112b. The limiting fastener 17 is clamped into the limiting groove 122a, and the limiting fastener 17 is clamped and fastened to a groove wall of the limiting groove 122a. Because of a structure of the limiting fastener 17, the limiting fastener 17 may form a detachable connection with the limiting groove 122a. The limiting fastener 17 is further in contact with the lug part 112, to prevent the second rotating shaft 122 from being detached from the second shaft hole 112b.

With reference to FIG. 13 and FIG. 9, the first shaft hole 132a on the connection part 132 of the antenna radiator 13 may be in rotation fitting with the first rotating shaft 121, so that the antenna radiator 13 can rotate around the first rotating shaft 121. In addition, the antenna radiator 13 can be electrically connected to the circuit board 151 by using the rotating shaft 12, the first adapter 16, and the spring 152. Therefore, the antenna radiator 13 can be electrically connected to the BeiDou communication module, so that the antenna radiator 13 can receive/send a BeiDou short packet.

The wearable device 10 in Embodiment 1 is integrated with a BeiDou short packet function, and can communicate with the outside in an environment without a network, thereby meeting a communication requirement of a user in an emergency scenario. In addition, compared with a dedicated BeiDou terminal that is large in size, heavy in weight, inconvenient to carry, has a weak human-machine interaction capability, and has a single function, the wearable device 10 is small in size, light in weight, convenient to carry, and is convenient for human-machine interaction (for example, components such as the display 14, the button, the motor, the buzzer, the speaker, and the microphone of the wearable device 10 support the user in performing operations, control, prompt, feedback, selection, confirmation, and information query on functions of the wearable device 10). The wearable device 10 may have rich functions for the user, for example, motion monitoring, activity monitoring, life assistance, leisure and entertainment, physical sign monitoring, environment monitoring, and the like, and can meet a use requirement of the user in a daily scenario.

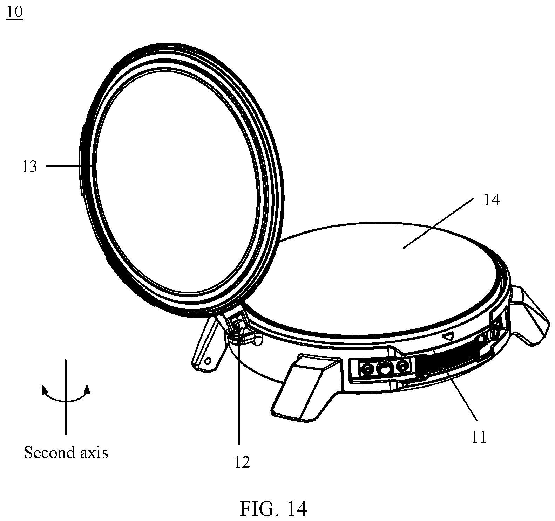

It is easy to understand from the foregoing description that, when the antenna radiator 13 is subject to a force, the antenna radiator 13 may rotate around the first axis relative to the housing 11 by using the rotating shaft 12, or may rotate around the second axis relative to the housing 11 by using the rotating shaft 12. For example, FIG. 10 shows a state when the antenna radiator 13 rotates around the first axis relative to the housing 11 to a position, and FIG. 14 shows a state when the antenna radiator 13 rotates around the second axis relative to the housing 11 to a position. In Embodiment 1, the antenna radiator 13 may first rotate around the first axis, and then rotate around the second axis.

As shown in FIG. 2, the antenna radiator 13 may be rotated to a closed position. In the closed position, the frame 131 of the antenna radiator 13 is closed with the housing 11, and the frame 131 surrounds the display 14 for a whole circle. The frame 131 may not overlap the display 14 at all, or may cover at least a part of a circumference of the display 14.

In Embodiment 1, both the circuit board assembly 15 and the display 14 may generate electromagnetic interference to an antenna signal. Because the antenna radiator 13 can rotate around the first axis and be far away from the circuit board assembly 15 and the display 14, clearance of the antenna radiator 13 is increased, and a radiation diameter of the antenna radiator 13 is increased. In addition, when the antenna radiator 13 rotates around the first axis from the closed position, a distance from the antenna radiator 13 to an arm of the user is increased, so that absorption of an antenna signal by a human body is reduced, and a reduction amplitude of a hand phantom is reduced. Therefore, antenna performance of the antenna radiator 13 can be further enhanced. In addition, because the antenna radiator 13 can rotate around the second axis, the radiation diameter of the antenna radiator 13 is increased. Therefore, in the solution of Embodiment 1, the antenna performance of the antenna radiator 13 is greatly improved.

In addition, as an appearance part of the wearable device 10, a design in which the antenna radiator 13 can rotate around the two intersecting axes can improve manipulation performance and playability of the wearable device 10, thereby improving user experience.

In Embodiment 1, the display 14 of the wearable device 10 may display a corresponding user interaction interface, so that the user uses the BeiDou short packet function.

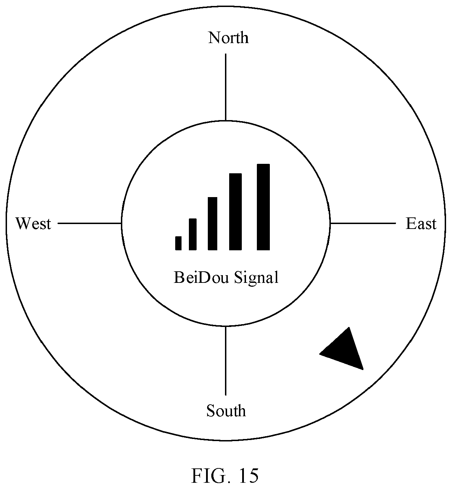

For example, three satellites of the BeiDou satellite navigation system are deployed in a geosynchronous orbit (Geosynchronous orbit, GEO). When using the BeiDou short packet function of the wearable device 10, the user needs to roughly align the wearable device 10 with an orientation of the BeiDou GEO satellite, and fine-tune a posture (for example, a tilt angle relative to an equator surface) of the wearable device 10 as required, to obtain an ideal BeiDou satellite signal. For this, the wearable device 10 may display a user interaction interface shown in FIG. 15. When the user uses the BeiDou short packet function (for example, the user may trigger the BeiDou short packet function by flipping the antenna radiator 13), a compass (a signal may be sensed by a geomagnetic sensor) and strength information of a BeiDou satellite signal may be displayed in the user interaction interface. Based on a prompt of the interface, the user may first quickly and roughly align with the BeiDou GEO satellite based on a direction of the compass, then adjust a hand posture/a posture of the wearable device 10, and determine an appropriate hand posture/a posture of the wearable device 10 with reference to the strength of the BeiDou satellite signal that is refreshed in real time, to start using the BeiDou short packet function.

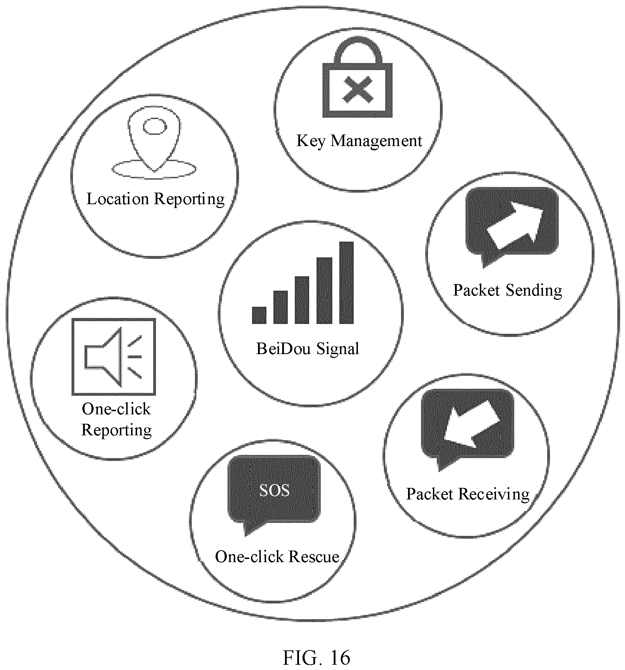

The wearable device 10 may further display a user interaction interface shown in FIG. 16. The user may enter the user interaction interface in a manner such as a BeiDou short packet shortcut entry of a system, or pressing and holding a watch crown, or selecting "BeiDou Short Packet" in a "Setting" option of a system. The user interaction interface centrally and briefly presents sub-functions related to the short packet function. These sub-functions include but are not limited to "BeiDou Signal", "Key Management", "Location Reporting", "One-click Reporting", "One-click Rescue", "Packet Sending", "Packet Receiving", and the like.

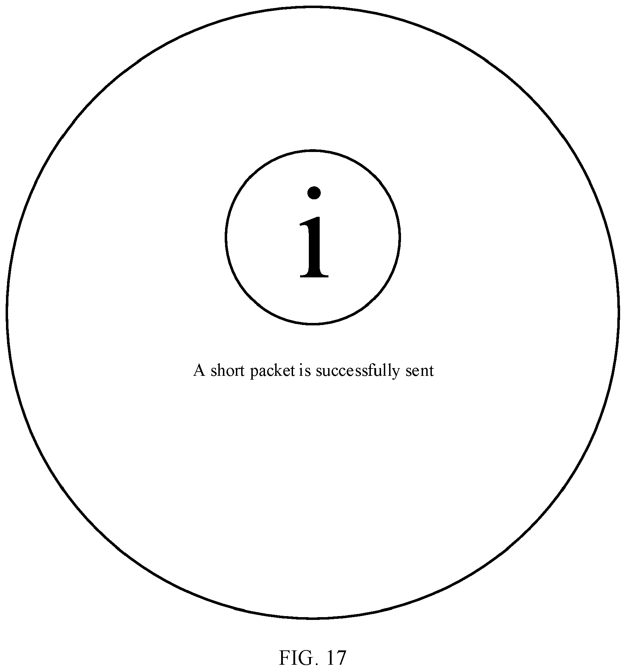

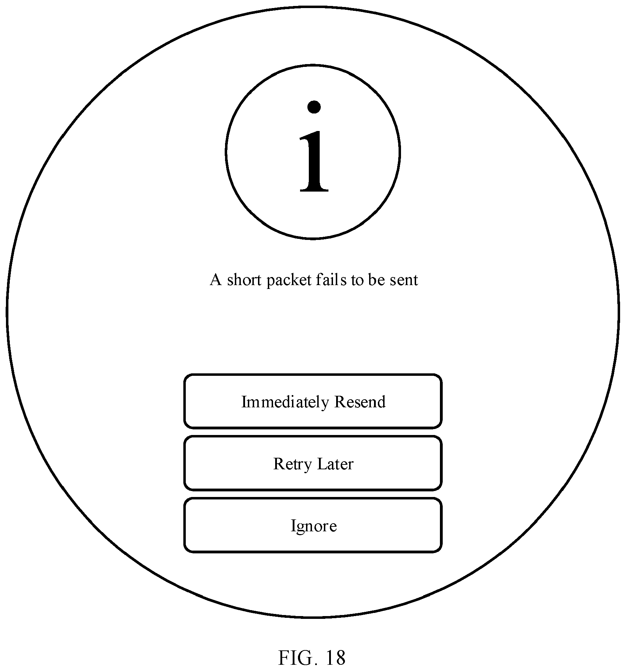

In the user interaction interfaces shown in FIG. 17 and FIG. 18, the wearable device 10 supports timely feeding back a sending success or failure result after sending the BeiDou short packet. When sending fails, the wearable device 10 supports options including immediate resending, retrying later, ignoring, and the like.

### Embodiment 2

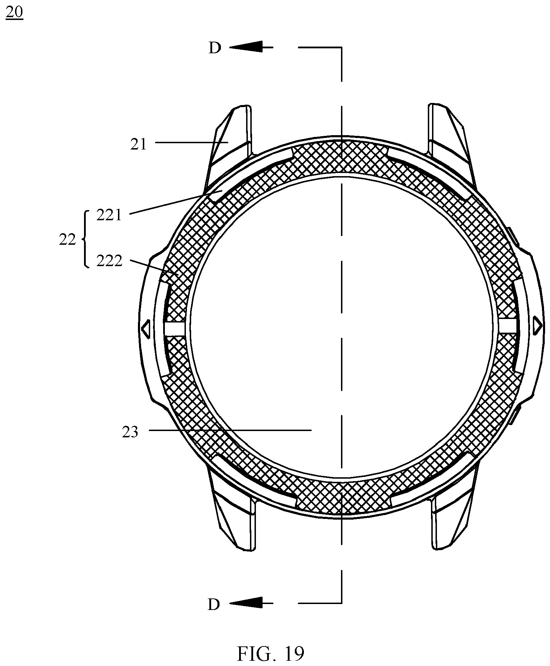

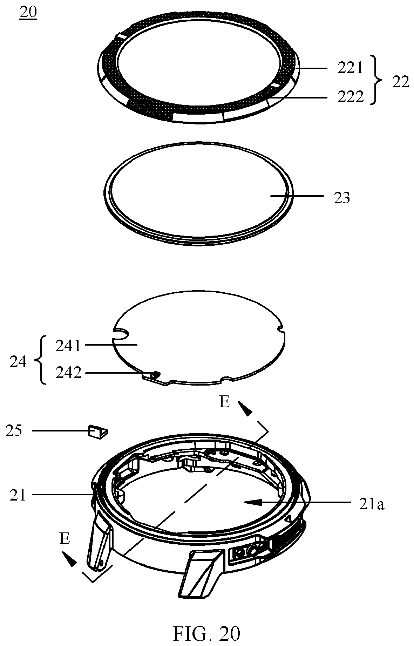

As shown in FIG. 19 and FIG. 20, Embodiment 2 provides a wearable device 20, and the wearable device 20 may include a housing 21, a circuit board assembly 24, a display 23, an antenna radiator 22, a second adapter 25, and the like. The circuit board assembly 24 may be the same as the circuit board assembly 15 in Embodiment 1, and the circuit board assembly 24 includes a circuit board 241 and a spring 242 installed on the circuit board 241. The display 23 may be the same as the display 14 in Embodiment 1.

Embodiment 2 differs from Embodiment 1 in the housing 21, the antenna radiator 22, and the second adapter 25. The following focuses on describing the housing 21, the antenna radiator 22, and the second adapter 25.

As shown in FIG. 20, the housing 21 may be basically in a closed ring shape or a tubular shape, and the housing 21 forms installation space 21a through enclosing. The circuit board assembly 24 may be installed in the installation space 21a. The display 23 is installed on the housing 21.

As shown in FIG. 20, FIG. 21, and FIG. 22, an end that is of the housing 21 and that faces the display 14 may be provided with an accommodating cavity 21d, and the accommodating cavity 21d may form an opening 21c on an axial surface (a normal line of the axial surface may be in a same direction as a center line of the housing 21 in a ring shape) of the housing 21. The accommodating cavity 21d may surround a periphery of the display 23 for a whole circle. The accommodating cavity 21d is configured to install the antenna radiator 22.

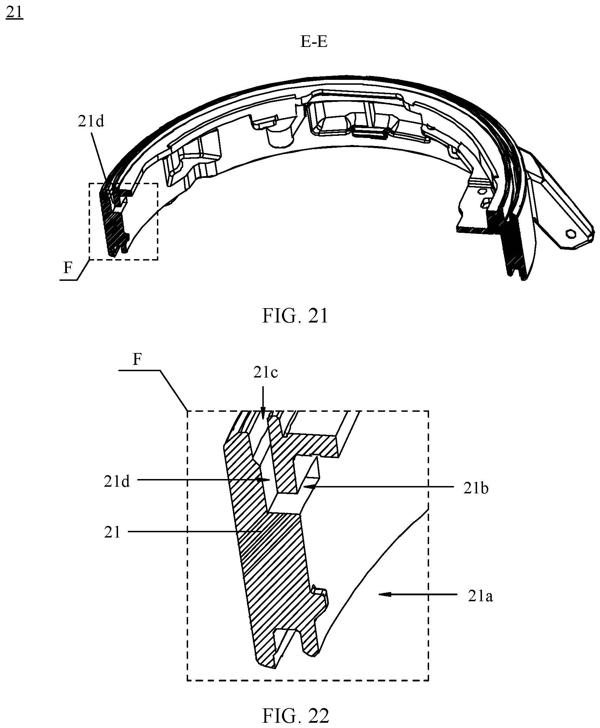

As shown in FIG. 22, an inner wall of the installation space 21a of the housing 21 is provided with a second penetrating hole 21b, and the second penetrating hole 21b connects the accommodating cavity 21d and the installation space 21a.

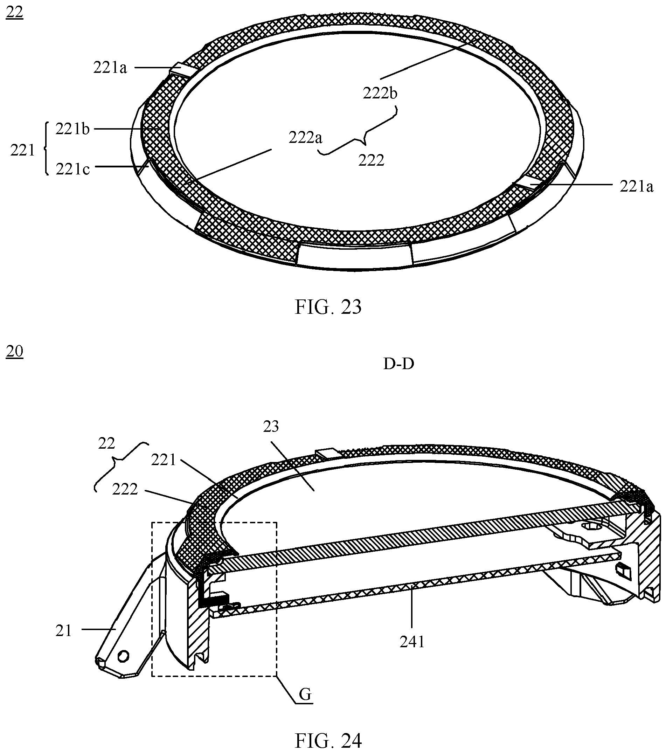

As shown in FIG. 23, the antenna radiator 22 may be basically in a closed ring shape, and may be used as a bezel of the smart watch. In another embodiment, the antenna radiator 22 may alternatively be an open ring structure, which forms an open area through enclosing.

As shown in FIG. 23, the antenna radiator 22 may include an insulating base 221 and a conductive layer 222 (marked with a shadow line) covering a surface of the insulating base 221.

As shown in FIG. 23, the insulating base 221 may include a horizontal area 221b and a tilted area 221c. The horizontal area 221b may be encircled into a ring structure in a horizontal plane from the perspective in FIG. 23. The tilted area 221c may surround the horizontal area 221b for a whole circle and tilt towards an outer side of the horizontal area 221b. The insulating base 221 may have a separating part 221a (which may belong to a part of the horizontal area 221b), a shape of the separating part 221a is not limited, and there may be at least two separating parts 221a. The insulating base 221 is made of an insulating material, for example, may be a non-conductive ceramic. The insulating base 221 made of the non-conductive ceramic is light, and is conducive to lightness of the wearable device 20.

The conductive layer 222 may be a metal film, and the conductive layer 222 may be formed on the insulating base 221 by using a coating process. Alternatively, the conductive layer 222 may be a metal layer, and the conductive layer 222 may be assembled on the insulating base 221, for example, installed on the insulating base 221 through bonding, embedding, or the like. Alternatively, the conductive layer 222 may be a conductive ceramic, and is formed on a surface of a non-conductive ceramic (that is, the insulating base 221) by using an integrated sintering process.

As shown in FIG. 23, the conductive layer 222 may be distributed in most areas of the horizontal area 221b of the insulating base 221 and a small area of the tilted area 221c. The conductive layer 222 is divided by the separating part 221a into several mutually insulated conductive areas. For example, as shown in FIG. 23, the conductive layer 222 is divided by two separating parts 221a into a conductive area 222a and a conductive area 222b. A quantity of conductive areas shown in FIG. 23 is merely an example. Based on a specific structure of the insulating base 221 and the quantity and distribution of the separating parts 221a, the conductive layer 222 may be divided into at least two conductive areas by the separating part 221a.

In Embodiment 2, each conductive area may be configured to: receive/send one type of antenna signal. For example, the conductive areas may separately receive/send the first network signal, for example, a GPS signal, a mobile communication signal, a Bluetooth signal, a Wi-Fi signal, or an NFC signal, and the BeiDou signal.

In other embodiments, the insulating base may not have a separating part, and the conductive layer on the insulating base is continuously distributed and is used as a conductive area as a whole. The conductive layer may be multiplexed into a plurality of antenna radiators, and can receive/send a plurality of antenna signals. For example, by using a software design and/or a switch circuit, the conductive layer may be multiplexed in a time division manner to separately receive/send the BeiDou signal and the first network signal at different moments; or the conductive layer may be multiplexed in a frequency division manner to separately receive/send the BeiDou signal and the first network signal at a same moment.

The second adapter 25 has a conductive property, for example, may be made of conductive silicone, and the second adapter 25 made of the conductive silicone may further have a sealing property. Alternatively, the second adapter 25 may be another conductive component, for example, a metal spring or a cable.

As shown in FIG. 24, FIG. 25, and FIG. 22, the second adapter 25 may penetrate the second penetrating hole 21b of the housing 21, one end of the second adapter 25 may extend into the accommodating cavity 21d of the housing 21, and the other end that is opposite to the end may extend into the installation space 21a. The end that is of the second adapter 25 and that is located in the installation space 21a may be connected to the spring 242 on the circuit board 241.

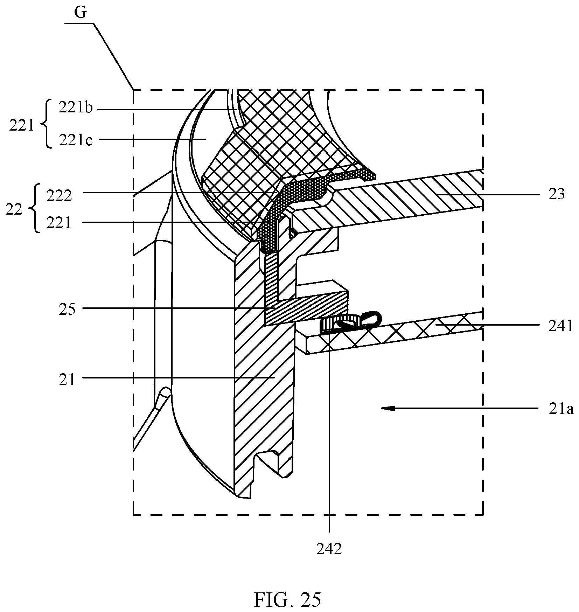

With reference to FIG. 25 and FIG. 22, an end that is of the tilted area 221c of the antenna radiator 22 and that is away from the horizontal area 221b may be located in the accommodating cavity 21d, and a remaining part of the antenna radiator 22 may be located outside the accommodating cavity 21d and surround the periphery of the display 23. The horizontal area 221b may cover a peripheral area of the display 23.

As shown in FIG. 25, a part that is of the antenna radiator 22 and that is located in the accommodating cavity 21d may be in contact with the second adapter 25, and a surface of the part that is of the antenna radiator 22 and that is located in the accommodating cavity 21d is the conductive layer 222. In this way, the antenna radiator 22 can be electrically connected to the circuit board 241 by using the conductive layer 222, the second adapter 25, and the spring 242, so as to be electrically connected to a BeiDou communication module, so that the antenna radiator 22 can receive/send a BeiDou short packet.

The wearable device 20 in Embodiment 2 can meet a communication requirement of a user in an emergency scenario, and can meet a use requirement of the user in a daily scenario.

In Embodiment 2, the antenna radiator 22 may further be used as an appearance part of the wearable device 20. Therefore, in the solution of Embodiment 2, the antenna radiator and the appearance part can be combined into one, so that an appearance of the wearable device 20 is complete and beautiful.

### Embodiment 3

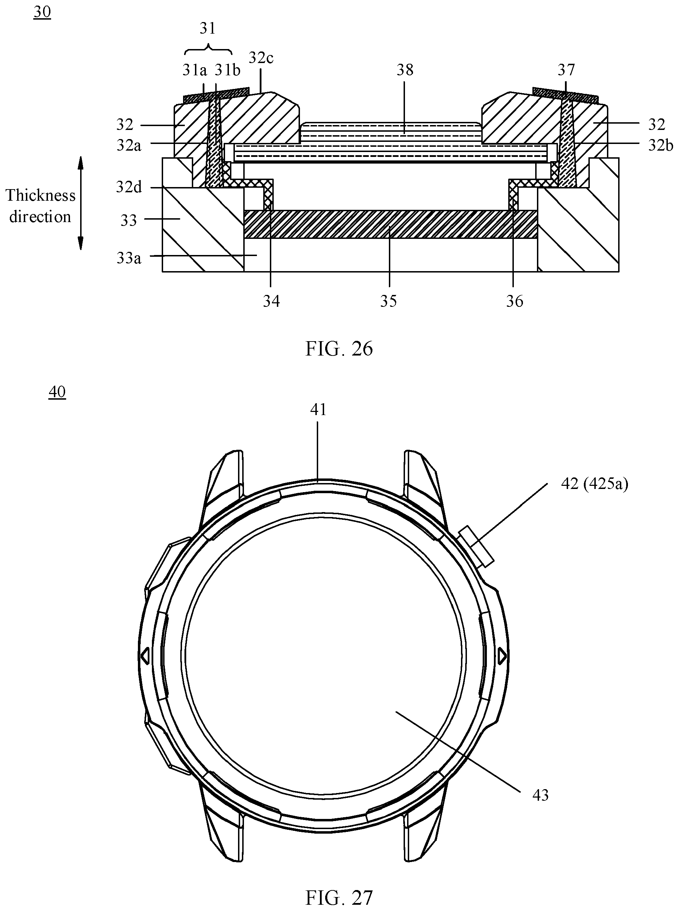

As shown in FIG. 26, Embodiment 3 provides a wearable device 30, and the wearable device 30 may include a first housing 33, a second housing 32, a display 38, a first antenna radiator 31, a second antenna radiator 37, a first spring 34, a second spring 36, and a circuit board 35.

The first housing 33 may correspond to the housing 11 or the housing 21. The first housing 33 may be approximately in a closed ring shape or a tubular shape, for example, may be used as a middle frame or a front housing of a smart watch. The first housing 33 forms installation space 33a through enclosing. The first housing 33 may be made of a non-conductive material, for example, a plastic material.

The circuit board 35, the first spring 34, and the second spring 36 are all installed in the installation space 33a. An end of the first spring 34 and an end of the second spring 36 are both connected to different feedpoints on the circuit board 35. The first spring 34 may be electrically connected to both a satellite positioning unit and a short packet unit in a BeiDou communication module on the circuit board 35. The second spring 36 may be electrically connected to a first communication module on the circuit board 35. The first spring 34 and the second spring 36 are distributed at a spacing on the circuit board 35.

The display 38 may correspond to the display 14 or the display 23. The display 38 is installed on the first housing 33.

The second housing 32 may be installed on the first housing 33, for example, installed at an opening at an end of the installation space 33a of the first housing 33. The second housing 32 surrounds a periphery of the display 38. Therefore, the second housing 32 and the display 38 cover the opening of the installation space 33a, and the circuit board 35, the first spring 34, and the second spring 36 are all accommodated in the installation space 33a and cannot be seen by a user.

In an implementation, the second housing 32 may cover a peripheral area of the display 38. In another implementation, the second housing 32 may not overlap the display 38 at all. The second housing 32 may be approximately in a closed ring shape or a tubular shape. The second housing 32 may be used as a bezel of the smart watch. The second housing 32 may be made of an insulating material, for example, a non-conductive ceramic. The second housing 32 made of the non-conductive ceramic is light and has a better appearance texture.

As shown in FIG. 26, the second housing 32 may be provided with an accommodating cavity 32a and an accommodating cavity 32b. Both the accommodating cavity 32a and the accommodating cavity 32b may penetrate the second housing 32, and both communicate with the installation space 33a. FIG. 26 shows only two accommodating cavities: the accommodating cavity 32a and the accommodating cavity 32b, and this is merely an example. According to an actual requirement, there may be any quantity of accommodating cavities, or there may be at least one accommodating cavity. Structural designs and fitting designs of the accommodating cavities are basically the same. Therefore, the following uses the accommodating cavity 32a as an example for description.

As shown in FIG. 26, for example, the accommodating cavity 32a may be approximately a thin channel or through hole (a length of the accommodating cavity 32a is far greater than a diameter, and the accommodating cavity 32a may be referred to as a micro through hole), and the accommodating cavity 32a may approximately extend in a thickness direction of the circuit board 35. One end of the accommodating cavity 32a may penetrate an outer surface 32c that is of the second housing 32 and that is opposite to the circuit board 35. The other end that is of the accommodating cavity 32a and that is opposite to the end may form an opening on a surface (that is, an inner side surface of the second housing 32) of a side that is of the second housing 32 and that faces the installation space 33a, and the accommodating cavity 32a communicates with the installation space 33a through the opening. In this way, it is convenient for the first spring 34 to pass through the opening and be in contact with the first antenna radiator 31 in the accommodating cavity 32a (which is described below). The accommodating cavity 32a may penetrate or not penetrate a surface 32d that is of the second housing 32 and that faces the circuit board 35 (FIG. 26 shows that the accommodating cavity 32a penetrates the surface), where the surface 32d may be in contact with a corresponding surface of the first housing 33.

Different from the implementation shown in FIG. 26, in another implementation, the other end of the accommodating cavity 32a may not form an opening on the inner side surface of the second housing 32, but may penetrate the surface 32d that is of the second housing 32 and that faces the circuit board 35 to form an opening on the surface 32c. For example, there may be a gap between the surface 32d of the second housing 32 and a corresponding surface of the first housing 33, so that the first spring 34 penetrates into the gap and is in contact with the first antenna radiator 31 in the accommodating cavity 32a (the first antenna radiator 31 being located in the accommodating cavity 32a is described in the following).

In the implementation shown in FIG. 26, from an end that is of the accommodating cavity 32a and that is away from the circuit board 35 to an end that is of the accommodating cavity 32a and that is close to the circuit board 35 (or from the outer surface 32c to the surface 32d), a cross-sectional area of the accommodating cavity 32a tends to increase.

A definition of the cross-sectional area may be as follows: Cross section is performed at different positions of the accommodating cavity 32a in a direction perpendicular to an extension direction of the accommodating cavity 32a, to obtain a plurality of closed cross-sectional patterns that are arranged in a spaced manner in sequence along the extension direction, where an area of each cross-sectional pattern is referred to as a cross-sectional area. For example, as shown in FIG. 26, the extension direction may be the thickness direction of the circuit board 35, and the cross-sectional area is an area of a cross-sectional pattern that is of the accommodating cavity 32a and that is perpendicular to the thickness direction.

"Tend to increase" may include continuous and even increase of an area of each cross section, or may include an overall increasing trend that is of an area of each cross section and in which a local abrupt value change and unevenness exist. For example, FIG. 26 shows that a cross-sectional area of the accommodating cavity 32a continuously and evenly increases, and the accommodating cavity 32a may be in a trapezoid shape with a small upper part and a large lower part.

In another implementation, based on a requirement, the accommodating cavity 32a may not need to have the foregoing design in which the cross-sectional area tends to increase. For example, all positions of the accommodating cavity 32a may have a same cross-sectional area.

As shown in FIG. 26, the first antenna radiator 31 may include a first part 31a and a second part 31b, and the first part 31a and the second part 31b may be connected together. The first part 31a may cover a local area of the surface 32c of the second housing 32, and is located outside the accommodating cavity 32a of the second housing 32. The second part 31b may be located in the accommodating cavity 32a, and may basically fill the accommodating cavity 32a. A shape of the second part 31b matches a shape of the accommodating cavity 32a, for example, the second part 31b may be in a trapezoid shape with a small upper part and a large lower part.

For example, the first part 31a may be made of a metal material. For example, the first part 31a may be formed on the surface 32c of the second housing 32 by using an electroplating process. The first part 31a is located on an outer surface of the wearable device 30, and the first part 31a made of the metal material has a good appearance effect and good wear resistance performance. For example, a material of the second part 31b may be a conductive ceramic. For example, the second part 31b may be formed in the accommodating cavity 32a of the second housing 32 by using an integrated sintering process.

It may be understood that the materials of the first part 31a and the second part 31b may be different or may be the same. In addition, the materials and forming processes of the first part 31a and the second part 31b are not limited to the foregoing description.

As shown in FIG. 26, an end of the first spring 34 may be in contact with the second part 31b of the first antenna radiator 31 through an opening at an end that is of the accommodating cavity 32a and that is close to the surface 32d. In this way, the antenna radiator 31 is electrically connected to the BeiDou communication module on the circuit board 35 by using the first spring 34, so that the first antenna radiator 31 can receive/send the BeiDou short packet.

In Embodiment 3, due to a structural size limitation, an area of the outer surface 32c of the second housing 32 is small. In view of this, the opening formed on the outer surface 32c of the second housing 32 by the accommodating cavity 32a of the second housing 32 may be small, to adapt to the outer surface 32c with a small area.

In addition, to increase mechanical connection strength between the second part 31b and the first spring 34, to ensure electrical connection reliability between the second part 31b and the first spring 34, the opening at an end that is of the accommodating cavity 32a and that is close to the installation space 33a of the first housing 33 may be large. In this way, a contact area between the second part 31b of the antenna radiator 31 and the first spring 34 can be increased, and the mechanical connection strength and the electrical connection reliability between the second part 31b and the first spring 34 can be increased. To intuitively describe the principle, in FIG. 26, two dashed lines are shown in the accommodating cavity 32a, and the two dashed lines represent a circular hole whose diameter is a diameter of a smaller end of the accommodating cavity 32a. It can be easily seen that, compared with an inner wall of the circular hole, an inner wall of the accommodating cavity 32a is tilted. Therefore, an area of an area that is on the second part 31b and that is in contact with the first spring 34 is large.

As shown in FIG. 26, a related design of the second antenna radiator 37 may be basically the same as a related design of the first antenna radiator 31. For example, a part of the second antenna radiator 37 may be filled in the accommodating cavity 32b, and the other part of the second antenna radiator 37 covers a local surface of the second housing 32 and is located outside the accommodating cavity 32b. The second antenna radiator 37 may be electrically connected to the first communication module on the circuit board 35 by using the second spring 36, so that the second antenna radiator 37 can receive/send a first network signal.

The wearable device 30 in Embodiment 3 can meet a communication requirement of a user in an emergency scenario, and can meet a use requirement of the user in a daily scenario. In addition, the antenna radiator in the wearable device 30 may further be used as an appearance part of the wearable device 30, and the antenna radiator and the appearance part are combined into one, so that the appearance of the wearable device 30 can be complete and beautiful.

### Embodiment 4

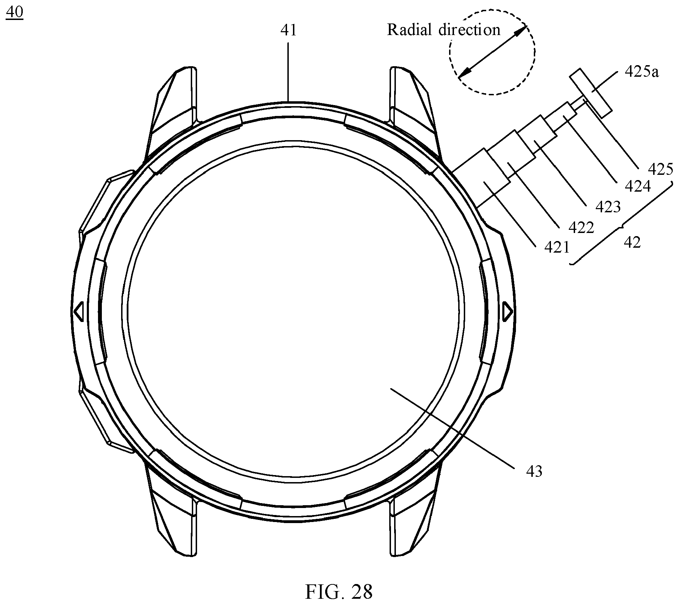

As shown in FIG. 27 and FIG. 28, Embodiment 4 provides a wearable device 40, and the wearable device 40 may include a housing 41, an antenna radiator 42, a display 43, a spring, a circuit board, a processor, a BeiDou communication module, another communication module, and the like.

A structure of the housing 41 is not specifically limited. For example, the housing 41 may be basically the same as the foregoing housing 21, and is also approximately in a closed ring structure. The housing 41 is also provided with an accommodating cavity used to install the antenna radiator 42. The accommodating cavity penetrates the housing 41, to connect the outside and installation space of the housing 41.

The display 43 is installed on the housing 41, and the spring, the circuit board, the processor, the BeiDou communication module, the another communication module, and the like of the wearable device 40 are accommodated in the installation space of the housing 41, so that a user cannot directly see the spring, the circuit board, the BeiDou communication module, the another communication module, and the like. The display 43 has a display plane, and the display plane is a plane that is of the display 43 and that faces an outer side of the wearable device 40, that is, a plane that can be observed by the user.

Different from the foregoing housing 21, the accommodating cavity on the housing 41 may be provided on a peripheral side surface of the housing 41 (a normal line of the peripheral side surface is in a radial direction of the housing 41).

The antenna radiator 42 includes an accommodating end and an exposed end 425a that are opposite to each other, and both the accommodating end and the exposed end 425a are two parts of the antenna radiator 42. The accommodating end of the antenna radiator 42 is located in the accommodating cavity and is connected to the spring, and the exposed end 425a of the antenna radiator 42 is located outside the accommodating cavity.

Different from the foregoing antenna radiator, the antenna radiator 42 may be installed on a side surface of the housing 41, and the antenna radiator 42 is a telescopic component. For example, the antenna radiator 42 may be telescopic in a direction parallel to the display plane of the display 43, or the antenna radiator 42 may be telescopic in the radial direction of the housing 41. When the antenna radiator 42 is extended (as shown in FIG. 28), a distance between the exposed end 425a and the accommodating end increases (that is, a distance between the exposed end 425a and the housing 41 increases). When the antenna radiator 42 is shortened (as shown in FIG. 27), a distance between the exposed end 425a and the accommodating end decreases (that is, the distance between the exposed end 425a and the housing 41 decreases).

As shown in FIG. 28, for example, the antenna radiator 42 may be formed by sequentially connecting several sub-radiators, and every two adjacent sub-radiators are slidably connected. For example, the antenna radiator 42 may include five sub-radiators that are sequentially connected, such as a first sub-radiator 421, a second sub-radiator 422, a third sub-radiator 423, a fourth sub-radiator 424, and a fifth sub-radiator 425. The first sub-radiator 421 is slidably connected to the second sub-radiator 422, the second sub-radiator 422 is slidably connected to the third sub-radiator 423, the third sub-radiator 423 is slidably connected to the fourth sub-radiator 424, and the fourth sub-radiator 424 is slidably connected to the fifth sub-radiator 425. It may be understood that, a quantity of sub-radiators of the antenna radiator 42 may be designed based on a requirement, and is not limited to the foregoing five, for example, the quantity may be at least two.

An end that is of the first sub-radiator 421 and that is far away from the second sub-radiator 422 is located in the accommodating cavity of the housing 41, and this end of the first sub-radiator 421 may be referred to as the foregoing accommodating end. The first sub-radiator 421 may be movably connected to the accommodating cavity of the housing 41, and the first sub-radiator 421 may move in a radial direction of the accommodating cavity (as shown in FIG. 27 and FIG. 28), or the first sub-radiator 421 is fixed in the accommodating cavity. For the foregoing two designs of the first sub-radiator 421, the accommodating end of the first sub-radiator 421 may be always located in the accommodating cavity.

The second sub-radiator 422, the third sub-radiator 423, the fourth sub-radiator 424, and the fifth sub-radiator 425 may all move in the radial direction of the accommodating cavity. An end that is of the fifth sub-radiator 425 and that is away from the first sub-radiator 421 may be referred to as the foregoing exposed end 425a, and the exposed end 425a is always located outside the accommodating cavity, and is also located outside the housing 41. A size (for example, a diameter) of the exposed end 425a may be large, so that the user applies a force to extend or shorten the antenna radiator 42.

For example, the first sub-radiator 421, the second sub-radiator 422, the third sub-radiator 423, the fourth sub-radiator 424, and the fifth sub-radiator 425 may all be of a tubular structure. The first sub-radiator 421 is located on a periphery of the second sub-radiator 422, and an inner wall of the first sub-radiator 421 may be slidably connected to an outer wall of the second sub-radiator 422. The second sub-radiator 422 is located on a periphery of the third sub-radiator 423, and an inner wall of the second sub-radiator 422 may be slidably connected to an outer wall of the third sub-radiator 423. The third sub-radiator 423 is located on a periphery of the fourth sub-radiator 424, and an inner wall of the third sub-radiator 423 may be slidably connected to an outer wall of the fourth sub-radiator 424. The fourth sub-radiator 424 is located on a periphery of the fifth sub-radiator 425, and an inner wall of the fourth sub-radiator 424 may be slidably connected to an outer wall of the fifth sub-radiator 425.

In this embodiment, the antenna radiator 42 may alternatively implement a telescopic design by using another structure, and this is not limited to the foregoing description. For example, each sub-radiator of the antenna radiator 42 may be in a plate shape or a groove shape, and every two adjacent sub-radiators are slidably connected.

In Embodiment 4, the antenna radiator 42 is electrically connected to a satellite positioning unit and a short packet unit in the BeiDou communication module on the circuit board by using the spring, to receive/send a BeiDou short packet. Alternatively, the antenna radiator 42 may receive/send the BeiDou signal and also receive/send a first network signal in a multiplexing manner. "Multiplexing" includes but is not limited to: performing time division multiplexing on the antenna radiator 42 by using a software design and/or a switch circuit, to separately receive/send the BeiDou signal and the first network signal at different moments; or performing frequency division multiplexing on the antenna radiator 42, to separately receive/send the BeiDou signal and the first network signal at a same moment. Therefore, the wearable device 40 in Embodiment 4 can meet a communication requirement of a user in an emergency scenario, and can meet a use requirement of the user in a daily scenario.

FIG. 27 and FIG. 28 in Embodiment 4 show only one antenna radiator 42. It may be understood that the wearable device 40 may alternatively have more such antenna radiators 42, for example, at least two. When the wearable device 40 has a plurality of antenna radiators 42, each antenna radiator 42 may not need to be multiplexed, or at least one of the antenna radiators 42 may be multiplexed.

In Embodiment 4, by designing a telescopic antenna radiator 42, after the antenna radiator 42 is extended, an effective length of the antenna radiator 42 is increased, and a distance between the antenna radiator 42 and the circuit board assembly, the display 43, and an arm of the user is increased, and this helps enhance antenna performance of the antenna radiator 42.

In Embodiment 4, for example, the antenna radiator 42 installed on the peripheral side surface of the housing 41 may further be used as a button of the wearable device 40. When the user presses and/or rotates the button (for example, presses and/or rotates the antenna radiator 42 when the antenna radiator 42 is in a folded state), a corresponding operation may be triggered, for example, selecting, confirming, or switching an image. Certainly, a design in which the antenna radiator 42 has a button function is not necessary.

### Embodiment 5

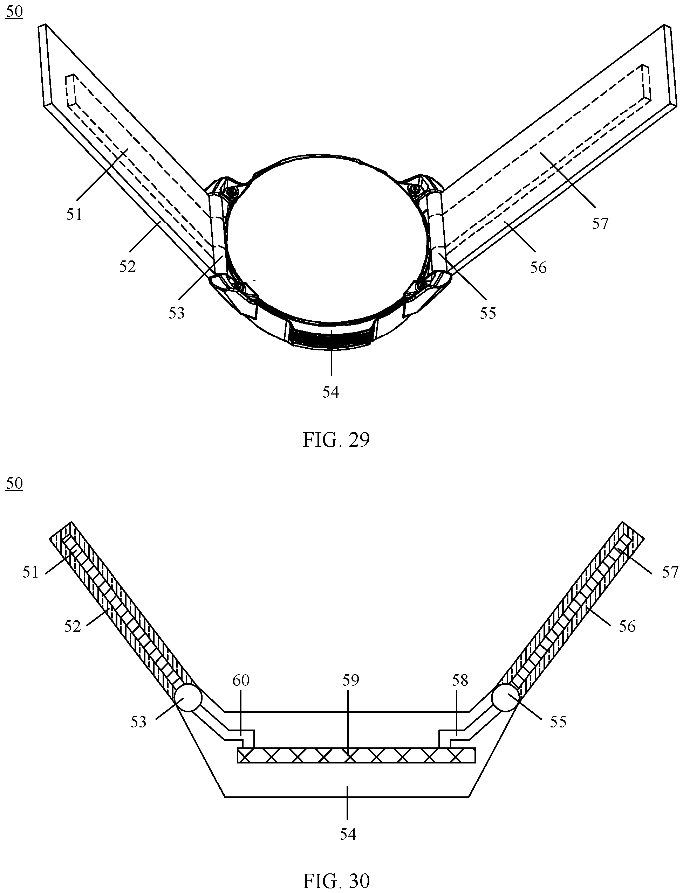

As shown in FIG. 29 and FIG. 30, Embodiment 5 provides a wearable device 50, and the wearable device 50 may be, for example, a smart watch. The wearable device 50 may include a housing 54, a spring bar shaft 53, a wearing band 52, a spring bar shaft 55, a wearing band 56, an antenna radiator 51, and an antenna radiator 57. The wearable device 50 may further include a circuit board 59, a spring 58, a spring 60, a processor, a BeiDou communication module, another communication module, a display, and the like.

The processor, the BeiDou communication module, and the another communication module are all arranged on the circuit board. Both the spring 58 and the spring 60 are installed on the circuit board 59. The spring 58 may be electrically connected to a first communication module on the circuit board 59. The spring 60 may be electrically connected to both a satellite positioning unit and a short packet unit in the BeiDou communication module on the circuit board 59. The circuit board, the spring, the processor, the BeiDou communication module, and the another communication module are all located in installation space of the housing 54. The display may be installed on the housing 54. The housing 54, an electronic component and a structure installed in the installation space of the housing 54 or on the housing 54 may form a main unit of the wearable device 50.

In Embodiment 5, a structure of the housing 54 is not specifically limited. Different from the foregoing housing, the housing 54 is not provided with an accommodating cavity used to install the antenna radiator, that is, the antenna radiator is not installed in the accommodating cavity.

Specific structures of the spring bar shaft 53 and the spring bar shaft 55 are not limited. The spring bar shaft 53 and the spring bar shaft 55 are respectively connected to two sides of the housing 54. The spring bar shaft 53 may be assembled to the housing 54 (the spring bar shaft 53 may be fastened to the housing 54 or rotationally connected to the housing 54), or may be connected to the housing 54 (the spring bar shaft 53 is fastened to the housing 54). The spring bar shaft 53 is connected to the spring 60, and the spring bar shaft 53 may be made of a conductive material, for example, a metal material. The spring bar shaft 55 may be assembled to the housing 54 (the spring bar shaft 55 may be fastened to the housing 54 or rotationally connected to the housing 54), or may be connected to the housing 54 (the spring bar shaft 55 is fastened to the housing 54). The spring bar shaft 55 is connected to the spring 58, and the spring bar shaft 55 may be made of a conductive material, for example, a metal material. Both the spring bar shaft 53 and the spring bar shaft 55 are configured to implement relative rotation of the wearing band and the housing 54.

The wearing band 52 is connected to the housing 54 by using the spring bar shaft 53, and can rotate relative to the housing 54. For example, when the spring bar shaft 53 is fastened to the housing 54, the wearing band 52 may be rotationally connected to the spring bar shaft 53. For example, an end part of the wearing band 52 may wrap the spring bar shaft 53 and rotate around the spring bar shaft 53. Alternatively, when the spring bar shaft 53 is rotationally connected to the housing 54, the wearing band 52 may be fastened to the spring bar shaft 53, and the wearing band 52 and the spring bar shaft 53 rotate together relative to the housing 54.

The wearing band 56 is connected to the housing 54 by using the spring bar shaft 55, and can rotate relative to the housing 54. For example, when the spring bar shaft 55 is fastened to the housing 54, the wearing band 56 may be rotationally connected to the spring bar shaft 55. For example, an end part of the wearing band 56 may wrap the spring bar shaft 55 and rotate around the spring bar shaft 55. Alternatively, when the spring bar shaft 55 is rotationally connected to the housing 54, the wearing band 56 may be fastened to the spring bar shaft 55, and the wearing band 56 and the spring bar shaft 55 rotate together relative to the housing 54.

Both the wearing band 52 and the wearing band 56 may be made of a soft insulating material, for example, nylon or woven. The wearing band 52 and the wearing band 56 that are located on the two sides of the housing 54 can be wound around a human body part (for example, a wrist), and form a detachable connection (for example, a lock connection), to implement wearing of the wearable device 50.

The antenna radiator 51 may be located inside the wearing band 52, and the antenna radiator 51 is wrapped by the material of the wearing band 52, that is, the antenna radiator 51 and the wearing band 52 may form a sandwich structure. The antenna radiator 51 can rotate with the wearing band 52. An end of the antenna radiator 51 may be connected to the spring bar shaft 53. For example, the end of the antenna radiator 51 may be rotationally connected to the spring bar shaft 53. For example, the end of the antenna radiator 51 may approximately form a tubular structure, and the tubular structure may be rotationally sleeved on the spring bar shaft 53, to implement a rotation connection between the antenna radiator 51 and the spring bar shaft 53.

The antenna radiator 57 may be located inside the wearing band 56, and the antenna radiator 57 is wrapped by the material of the wearing band 56, that is, the antenna radiator 57 and the wearing band 56 may form a sandwich structure. The antenna radiator 57 can rotate with the wearing band 56. An end of the antenna radiator 57 may be connected to the spring bar shaft 55. For example, the end of the antenna radiator 57 may be rotationally connected to the spring bar shaft 55. For example, the end of the antenna radiator 57 may approximately form a tubular structure, and the tubular structure may be rotationally sleeved on the spring bar shaft 55, to implement a rotation connection between the antenna radiator 57 and the spring bar shaft 55.

With reference to FIG. 30, the antenna radiator 51 may be electrically connected to the BeiDou communication module on the circuit board 59 by using the spring bar shaft 53 and the spring 60, to implement a function of receiving/sending a BeiDou short packet. The antenna radiator 51 may alternatively receive/send both a BeiDou signal and a first network signal through time division multiplexing or frequency division multiplexing. The antenna radiator 57 may be electrically connected to a ground communication module on the circuit board 59 by using the spring bar shaft 55 and the spring 58, to implement a function of receiving/sending the first network signal. The antenna radiator 57 may alternatively receive/send both the first network signal and the BeiDou signal through time division multiplexing or frequency division multiplexing.

It may be understood that, the antenna radiator 51 is used as a BeiDou antenna radiator, and the antenna radiator 57 is used as another antenna radiator. This is merely an example and is not a limitation on the solution in Embodiment 5. For example, the antenna radiator 51 may alternatively be used as the another antenna radiator, and the antenna radiator 57 may be used as the BeiDou antenna radiator.

The wearable device 50 in Embodiment 5 can meet a communication requirement of a user in an emergency scenario, and can meet a use requirement of the user in a daily scenario. In addition, the antenna radiator is disposed in the wearing band, and the antenna radiator is electrically connected to the communication module by using the spring bar shaft and the spring, so that internal space of the wearing band can be effectively used to arrange the antenna radiator, thereby saving internal space of the main unit of the wearable device 50. In addition, the antenna radiator is disposed in the wearing band, so that the antenna radiator is far away from a circuit board assembly of the wearable device 50, thereby ensuring antenna performance of the antenna radiator.

The foregoing describes in detail a hardware structure of a wearable device according to embodiments of this application. The following describes a BeiDou short packet sending method applied to the wearable device.

### Embodiment 6

Embodiment 6 provides a BeiDou short packet sending method, and the sending method is applicable to any one of the foregoing wearable devices. The sending method may include the following steps.

When receiving an input signal and/or determining that a current environment meets a trigger condition, a processor of a wearable device controls a BeiDou communication module to send a BeiDou short packet by using an antenna radiator.

The wearable device may be any one of the wearable device 10 to the wearable device 50, and the antenna radiator may be a dedicated BeiDou antenna radiator in the wearable device, or may be an antenna radiator that is multiplexed as a BeiDou antenna radiator and another antenna radiator. The processor controls the BeiDou communication module to send the BeiDou short packet by using the antenna radiator, that is, controls a short packet unit in the BeiDou communication module to send the BeiDou short packet by using the antenna radiator.

The input signal may be a signal generated by a human-computer interaction module of the wearable device in response to a user operation, and the input signal is used to trigger a BeiDou short packet function. The human-computer interaction module includes but is not limited to the display 14 or the display 23, the button (installed in the housing 11 or the housing 21), a microphone, and the like. For example, the display 14 or the display 23 responds to a touch operation of the user, and generates the input signal. Alternatively, the button receives a pressing and/or rotation operation of the user, and a button circuit may generate the input signal. Alternatively, the microphone receives a voice input by the user, and generates the input signal.

In Embodiment 6, the processor of the wearable device may determine, based on the user operation, that the user wants to send the BeiDou short packet. Then, the processor controls the BeiDou communication module to send the BeiDou short packet by using the antenna radiator. This is a mechanism for a user to manually send the BeiDou short packet.

The current environment may include at least one of a working status of the wearable device, a current moment, a parameter of a natural environment in which the wearable device is located, and a physical sign parameter of a user wearing the wearable device.

The working status of the wearable device may include a network environment, for example, a signal strength of a cellular network or a signal strength of a BeiDou satellite network. The natural environment parameter may include temperature, humidity, a wind speed, a height, a depth, ultraviolet intensity, ambient light intensity, CO2 concentration, and atmospheric pressure of the natural environment, location information of the wearable device, and the like. The physical sign parameter of the user may include blood pressure, a blood flow rate, body temperature, a heart rate, blood oxygen, an electrocardiogram, a cardiopulmonary sound, a respiratory rate, a skin water content, falling, trembling, and the like.

The wearable device may detect the current environment by using a corresponding module. For example, a natural environment monitoring module may be used to detect the parameter of the natural environment in which the wearable device is located. For example, an ambient light sensor is used to detect current ambient light intensity, a geomagnetic sensor is used to detect a southbound direction, and a temperature sensor is used to detect current ambient temperature. For example, a physical sign detection module may be used to detect the physical sign parameter of the user. For example, a gyroscope and an acceleration sensor are used to detect an action posture (to determine whether the user falls or trembles) of the user, a body temperature sensor is used to detect body temperature of the user, a blood oxygen sensor is used to detect blood oxygen of the user, and a PPG photoelectric sensor is used to measure a heart rate of the user.

The trigger condition is a rule that is set in the wearable device, that can be fixed or customized, and that triggers the BeiDou short packet function.

For example, if the current environment is the network environment, the trigger condition may include at least one of the following conditions: Duration in which the signal strength of the cellular network is less than a signal strength threshold exceeds specified duration, and the signal strength of the BeiDou satellite network is less than a signal strength threshold. That is, if the signal strength of the wearable device in the cellular network is excessively weak, or even reaches specific duration (for example, 10 minutes) in a network environment without the cellular network, and/or the signal strength of the BeiDou satellite network is excessively weak, the processor controls the BeiDou communication module to send the BeiDou short packet by using the antenna radiator.

For example, if the current environment is the current moment, the trigger condition may include the following condition: The current moment is a specified moment. That is, if the current moment reaches the specified moment, the processor controls the BeiDou communication module to send the BeiDou short packet by using the antenna radiator.

For example, if the current environment is the natural environment parameter and/or the physical sign parameter, the trigger condition may include at least one of the following conditions: A deviation between the natural environment parameter and a specified value exceeds a threshold, or a deviation between the physical sign parameter and a specified value exceeds a threshold. That is, when a sudden change or an abnormality occurs in the natural environment parameter and/or the physical sign parameter, the processor controls the BeiDou communication module to send the BeiDou short packet by using the antenna radiator.

When a sudden change or an abnormality occurs in the natural environment parameter and/or the physical sign parameter, the processor may automatically collect and analyze natural environment information and physical sign information, and provide a corresponding risk reduction measure and suggestion. For example, the user may be suggested to adjust an activity amount, supplement oxygen/hydration/saccharide, keep body temperature, and go to a safe place. These measures and suggestions may be set in the wearable device in advance, or may be received by the wearable device from a rescue platform by communicating with the rescue platform by using a BeiDou satellite.

In Embodiment 6, the processor may determine whether the current environment meets the trigger condition. When determining that the current environment meets the trigger condition, the processor controls the BeiDou communication module to send the BeiDou short packet by using the antenna radiator. This is a mechanism for automatically sending the BeiDou short packet. In the mechanism for automatically sending the BeiDou short packet, before the BeiDou short packet is sent, a step of user confirmation may be performed. After confirmation of the user, the BeiDou short message is sent.

The two BeiDou short packet sending mechanisms in Embodiment 6 are independent of each other, and may be executed simultaneously or selectively.

The BeiDou short packet function not only has a high requirement on power supply, but also has large impact on battery energy consumption and endurance. Therefore, Embodiment 6 may use the following flexible and intelligent short packet function power saving solutions.

In Embodiment 6, that a BeiDou communication module is controlled to send a BeiDou short packet by using an antenna radiator may include: controlling, according to a sending policy, the BeiDou communication module to send the BeiDou short packet by using the antenna radiator.

In Implementation 1, the sending policy may include: when a quantity of remaining BeiDou short packets that can be sent is less than a threshold and/or remaining power of the wearable device is less than a threshold, selecting a BeiDou short packet with a highest priority in a BeiDou short packet list for sending, or reassembling and sending a BeiDou short packet in a BeiDou short packet list, where reassembling includes but is not limited to semantic extraction and enrichment, word tailoring, extracting a plurality of keywords to combine into one BeiDou short packet, and the like; alternatively, sending a BeiDou short packet selected by the user from a BeiDou short packet list.

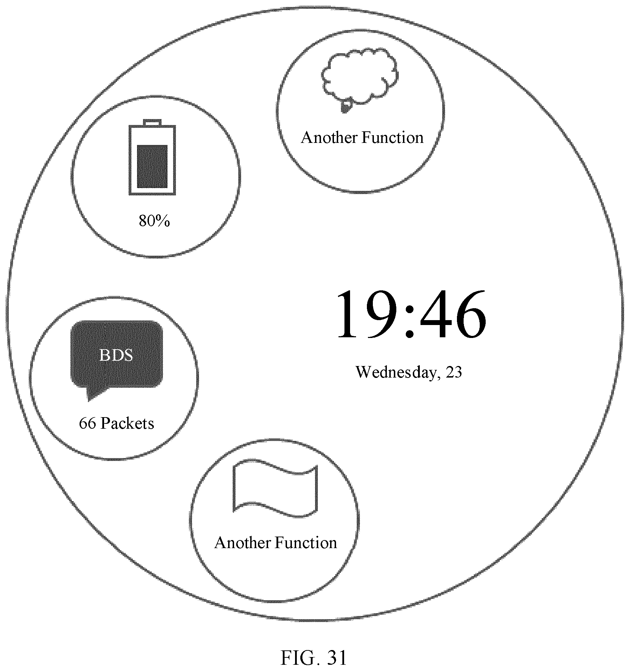

The quantity of the remaining BeiDou short packets that can be sent may be determined by combining the remaining power of the wearable device and energy consumption in receiving/sending the BeiDou short packet. A user interaction interface may be used to prompt the remaining power and the quantity of the remaining BeiDou short packets that can be sent. A reference user interaction interface is shown in FIG. 31.

For example, a to-be-sent BeiDou short packet list may be queried, and a BeiDou short packet with a highest priority is automatically selected from the list for sending. Alternatively, the user may be prompted to manually select the BeiDou short packet from the BeiDou short packet list, and the BeiDou short packet selected by the user is sent. Alternatively, the BeiDou short packet in the BeiDou short packet list may be automatically reassembled based on a simplification operation such as semantic saving, tailoring, and keyword packaging, and the reassembled BeiDou short packet is sent.

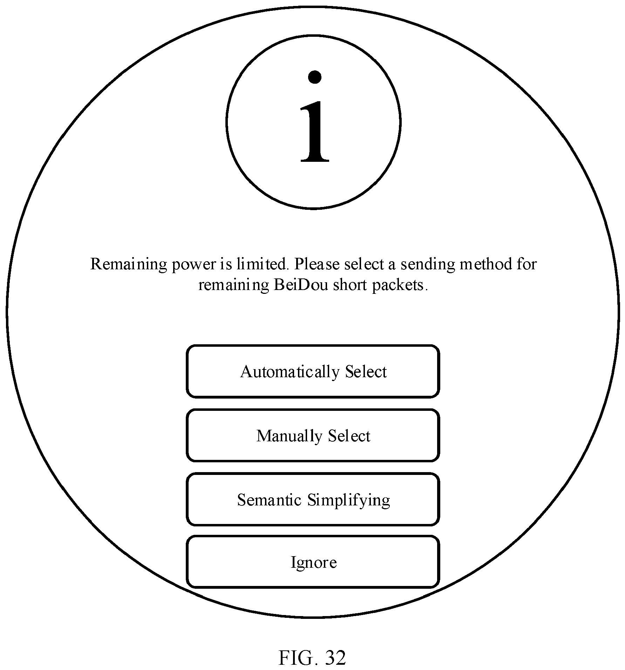

Before the BeiDou short packet is sent, a message is displayed in a user interaction interface, to ask the user to select a sending manner. A reference user interaction interface is shown in FIG. 32.

In Implementation 2 of Embodiment 6, different from that is Implementation 1, the sending policy may include: first buffering a to-be-sent BeiDou short packet when a status indicated by the physical sign information, the natural environment information, and/or power information is a safe state, and sending the buffered BeiDou short packet when it is detected that the user operates the wearable device; and when the status indicated by the physical sign information, the natural environment information, and/or the power information is an unsafe state, directly sending the BeiDou short packet.

In Implementation 2, the processor may comprehensively evaluate a security status of the wearable device or the user by combining information from the physical sign detection module, the natural environment monitoring module, and the power supply module. An evaluation result includes the safe state and the unsafe state. In the safe state, the wearable device can run normally, reliably, and continuously, or the user can perform an activity normally. In the unsafe state, the wearable device cannot run normally, reliably, and continuously, or the user cannot perform an activity normally.

In Implementation 2, when the evaluation result indicates that a status of the wearable device or a status of the user is the safe state, the processor may buffer the to-be-sent BeiDou short packet to a storage module, and send the buffered BeiDou short packet when detecting that the user operates the wearable device. For example, after detecting that the user lifts the wrist, the processor attempts to send the BeiDou short packet in the background. In this manner, frequent satellite searching and BeiDou short packet sending behaviors caused by random activities of the user or an undesirable BeiDou satellite signal can be avoided, thereby saving power.

In this implementation 2, when the evaluation result indicates that the status of the wearable device or the status of the user is the unsafe state, the BeiDou short packet may be directly sent, to contact the outside in time. Content of the BeiDou short packet may include necessary information that represents the unsafe state, for example, key physical sign parameters including a heart rate, blood oxygen, body temperature, and the like, and key natural environment parameters including temperature, location information, an altitude, atmospheric pressure, and the like.

According to the foregoing implementation in Embodiment 6, a built-in policy is set and a BeiDou short packet is sent according to the built-in policy, so that in a scenario in which power of the wearable device is insufficient, the BeiDou short packet can be selectively sent based on a user requirement, to properly use remaining power of the device, thereby meeting the user requirement, and enhancing user experience.

In Embodiment 6, for example, the content of the sent BeiDou short packet may include at least one of the natural environment parameter, the physical sign parameter, preset information, and user-defined information.

The preset information may be information set in the wearable device in advance. For example, the preset information may be emergency description or rescue information, for example, information about an emergency, a life threat, a shortage of spare materials, helping another rescued object seek rescue, performing a special movement or activity (such as diving, boating, sailing, mountain climbing, rock climbing, off-road, adventure, skiing, wing-mounted flight, aviation driving, or parachute jumping), and the like.

The user-defined information is information edited and entered by the user. The user may edit the user-defined information on another external device (for example, an external device having a large input interface, such as a mobile phone or a tablet computer) that is convenient for entering. The wearable device may receive the user-defined information from the external device by using another communication module, and send the received user-defined information in a form of a BeiDou short packet.

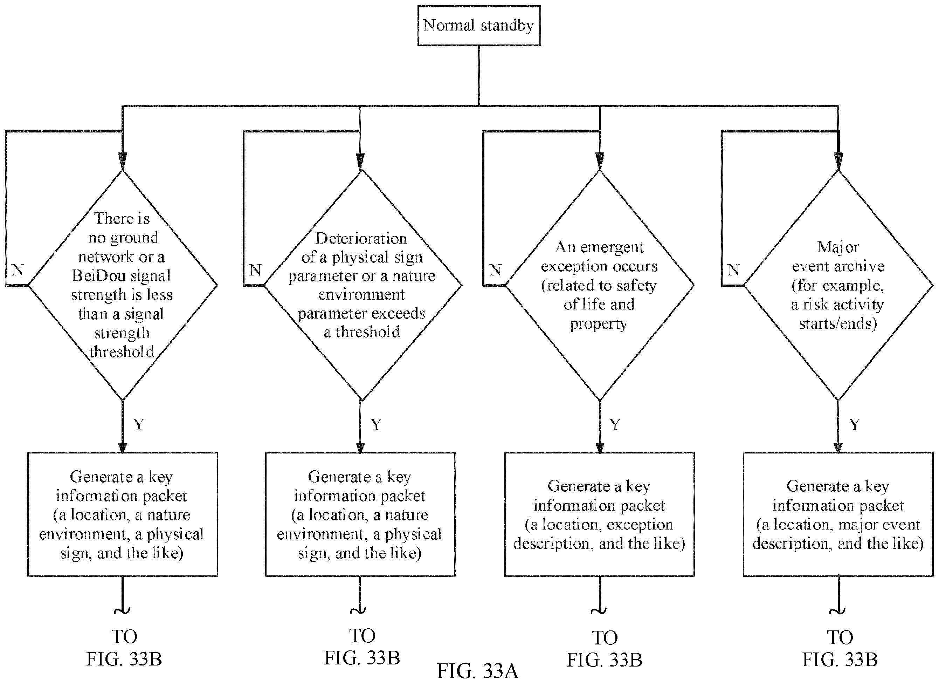

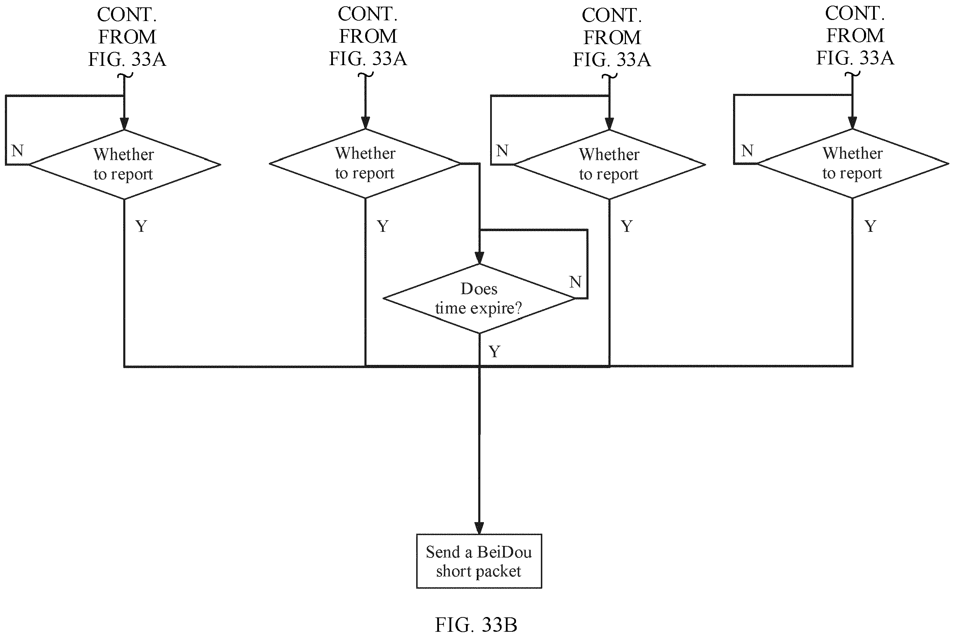

FIG. 33A and FIG. 33B are a schematic block flowchart of the foregoing several BeiDou short packet sending mechanisms.

The solution in Embodiment 6 enables the wearable device to send the BeiDou short packet, so that the wearable device can communicate with the outside in an environment without a network, thereby meeting a communication requirement of a user in an emergency scenario.

An embodiment of this application further provides a wearable device, including a processor and a non-transitory computer-readable storage medium, where the non-transitory computer-readable storage medium is coupled to the processor and stores a program to be executed by the processor. When the program is executed by the processor, the wearable device is enabled to perform the BeiDou short packet sending method described above.

An embodiment of this application further provides a non-transitory computer-readable storage medium, including program code. When the program code is executed by a computer device, the program code is used to perform the foregoing BeiDou short packet sending method.

An embodiment of this application further provides a chip, including a processor, and the processor is configured to: invoke, from a memory, a computer program, and run the computer program, so that a device on which the chip is installed performs the foregoing BeiDou short packet sending method.

It should be understood that, the processor mentioned in embodiments of this application may be a central processing unit (Central Processing Unit, CPU), or may be another general-purpose processor, a digital signal processor (Digital Signal Processor, DSP), an application specific integrated circuit (Application Specific Integrated Circuit, ASIC), a field programmable gate array (Field Programmable Gate Array, FPGA), or another programmable logic device, discrete gate or transistor logic device, discrete hardware component, or the like. The general-purpose processor may be a microprocessor, or the processor may be any conventional processor, or the like.

It may be understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) is integrated into the processor.

It should be noted that the memory described in this specification aims to include but is not limited to these memories and any memory of another proper type.

It should be further understood that "first", "second", "third", "fourth", and various numbers in this specification are merely used for differentiation for ease of description, and are not intended to limit the scope of this application.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The foregoing units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, some of the technical solutions may be implemented in the form of a software product. The computer software product is stored in a storage medium and includes several instructions for instructing a computing device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

A sequence of the steps of the method in embodiments of this application may be adjusted, combined, or removed based on an actual requirement.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A wearable device, wherein
the wearable device comprises an antenna radiator, a BeiDou communication module, and a processor; and
the BeiDou communication module comprises a satellite positioning unit and a short packet unit; the satellite positioning unit is configured to obtain, under control of the processor, global positioning information by using the antenna radiator; and the short packet unit is configured to multiplex, under control of the processor, the antenna radiator to receive/send a BeiDou short packet.

2. The wearable device according to claim 1, wherein
the short packet unit receives/sends the BeiDou short packet by using the antenna radiator in a time division multiplexing manner.

3. The wearable device according to claim 1 or 2, wherein
the satellite positioning unit is further configured to: under control of the processor, obtain a timing signal by using the antenna radiator, and send the timing signal to the short packet unit; and the short packet unit is configured to: under control of the processor, perform clock synchronization based on the timing signal, and after clock synchronization, multiplex the antenna radiator to receive/send the BeiDou short packet.

4. The wearable device according to claim 1 or 2, wherein
the short packet unit is configured to: under control of the processor, multiplex the antenna radiator to obtain a timing signal, perform clock synchronization based on the timing signal, and after clock synchronization, multiplex the antenna radiator to receive/send the BeiDou short packet.

5. The wearable device according to any one of claims 1 to 4, wherein
the wearable device comprises a housing, both the BeiDou communication module and the processor are located in the housing, the antenna radiator is connected to the housing, and at least a part of the antenna radiator is exposed outside the housing.

6. The wearable device according to claim 5, wherein
the wearable device comprises a rotating shaft, and the rotating shaft is located on an outer side of the housing, and connects the housing to the antenna radiator; and
the antenna radiator is located outside the housing; and the antenna radiator can rotate around a first axis and a second axis relative to the housing by using the rotating shaft, wherein the second axis intersects the first axis.

7. The wearable device according to claim 6, wherein
the antenna radiator has a first shaft hole, and the housing has a second shaft hole; and
the rotating shaft comprises a first rotating shaft and a second rotating shaft, and the first rotating shaft is connected to an axial end of the second rotating shaft; a center line of the first rotating shaft is the first axis, and a center line of an end that is of the second rotating shaft and that is away from the first rotating shaft is the second axis; the first rotating shaft and the first shaft hole are in rotation fitting, so that the antenna radiator can rotate around the first axis relative to the housing; and the second rotating shaft and the second shaft hole are in rotation fitting, so that the antenna radiator can drive the rotating shaft to rotate around the second axis relative to the housing.

8. The wearable device according to claim 7, wherein
the end that is of the second rotating shaft and that is away from the first rotating shaft is exposed from the second shaft hole, and the end that is of the second rotating shaft and that is away from the first rotating shaft has a limiting groove; and
the wearable device comprises a limiting fastener, and the limiting fastener has a notch; and the limiting fastener is clamped into the limiting groove, and is in contact with an area that is of the housing and that is located around the second rotating shaft, to prevent the second rotating shaft from being detached from the second shaft hole.

9. The wearable device according to any one of claims 6 to 8, wherein
the wearable device comprises a circuit board and a spring, both the circuit board and the spring are located in the housing, and the spring is installed on the circuit board; and both the processor and the BeiDou communication module are disposed on the circuit board, and the spring is electrically connected to both the satellite positioning unit and the short packet unit in the BeiDou communication module;
the housing has a first penetrating hole, and the first penetrating hole penetrates the housing to connect an inner side and the outer side of the housing; and
the wearable device comprises a first adapter, the first adapter passes through the first penetrating hole, one end of the first adapter is connected to the spring in the housing, and the other end of the first adapter is connected to the rotating shaft located outside the housing.

10. The wearable device according to claim 9, wherein
the housing comprises a main part and a lug part, the main part forms installation space through enclosing, the lug part is connected to an outer side of the main part, and the lug part forms an installation groove through enclosing; the first penetrating hole penetrates the main part, and connects the installation space and the installation groove; and the second shaft hole is disposed on the lug part;
the circuit board is installed in the installation space; and a display is installed on the main part and covers the installation space;
the rotating shaft and the second shaft hole of the lug part are in rotation fitting, and the rotating shaft is rotationally connected to the antenna radiator; and
one end of the first adapter is located in the installation space and is connected to the spring, and the other end of the first adapter is located in the installation groove and is in contact with the rotating shaft.

11. The wearable device according to any one of claims 6 to 10, wherein
the wearable device comprises the display, and the display is installed on the housing; and
the antenna radiator comprises a frame and a connection part, the frame is connected to the connection part, and the frame is in a closed ring shape or an open ring shape; and the connection part is rotationally connected to the rotating shaft, so that the antenna radiator can rotate around the first axis to a closed position, wherein at the closed position, the frame and the housing are closed, and the frame surrounds the display.

12. The wearable device according to claim 5, wherein
the housing has an accommodating cavity; and a part of the antenna radiator is located in the accommodating cavity, and the other part of the antenna radiator is located outside the accommodating cavity and is exposed outside the housing.

13. The wearable device according to claim 12, wherein
the antenna radiator comprises an insulating base and a conductive layer covering the insulating base; a part of the insulating base and a part of the conductive layer are both fastened in the accommodating cavity, and the other part of the insulating base and the other part of the conductive layer are both located outside the accommodating cavity and are both exposed outside the housing; and the conductive layer is electrically connected to both the satellite positioning unit and the short packet unit in the BeiDou communication module.

14. The wearable device according to claim 13, wherein
the insulating base has at least two separating parts, the at least two separating parts are spaced from each other, and divide the conductive layer into several mutually insulated conductive areas, wherein one of the conductive areas is electrically connected to both the satellite positioning unit and the short packet unit in the BeiDou communication module; and
the wearable device comprises a first communication module disposed in the housing, and the first communication module is electrically connected to the processor and the remaining conductive areas; and the first communication module is configured to: under control of the processor, receive/send a first network signal by using the remaining conductive areas.

15. The wearable device according to any one of claims 12 to 14, wherein
the wearable device comprises a circuit board and a spring, both the circuit board and the spring are located in the housing, and the spring is installed on the circuit board; and both the processor and the BeiDou communication module are disposed on the circuit board, and the spring is electrically connected to both the satellite positioning unit and the short packet unit in the BeiDou communication module;
the housing has a second penetrating hole, and the second penetrating hole connects the accommodating cavity and an inner side of the housing; and
the wearable device comprises a second adapter, the second adapter is located in the second penetrating hole, one end of the second adapter is connected to the conductive layer in the part that is of the antenna radiator and that is fastened in the accommodating cavity, and the other end of the second adapter is connected to the spring.

16. The wearable device according to claim 15, wherein
the second adapter is conductive silicone, a spring, or a cable.

17. The wearable device according to any one of claims 13 to 16, wherein
the insulating base is a non-conductive ceramic; and/or the conductive layer is metal or a conductive ceramic.

18. The wearable device according to any one of claims 13 to 17, wherein
the wearable device comprises a display, and the display is installed on the housing; and the antenna radiator is in a closed ring shape, and the antenna radiator surrounds a periphery of the display.

19. The wearable device according to claim 12, wherein
the housing comprises a first housing and a second housing installed on the first housing; the first housing forms installation space through enclosing; and the accommodating cavity is disposed on the second housing, and the accommodating cavity penetrates the second housing and is in communication with the installation space;
both the BeiDou communication module and the processor are located in the installation space; and
the wearable device comprises a conductive material; a first part of the conductive material is located outside the accommodating cavity and covers a local surface of the second housing, and a second part of the conductive material fills the accommodating cavity and is electrically connected to both the satellite positioning unit and the short packet unit in the BeiDou communication module; and the conductive material is used as the antenna radiator.

20. The wearable device according to claim 19, wherein
the wearable device comprises a display, the display is installed on the first housing, the display and the second housing cover the installation space, and the second housing surrounds a periphery of the display; and the accommodating cavity is located on an outer side of the display.

21. The wearable device according to claim 19 or 20, wherein
the second housing has an outer surface that is opposite to the first housing, and the accommodating cavity penetrates the outer surface.

22. The wearable device according to any one of claims 19 to 21, wherein
the wearable device comprises a circuit board and a spring, and both the circuit board and the spring are located in the installation space; both the processor and the BeiDou communication module are disposed on the circuit board; and the spring is installed on the circuit board, and is electrically connected to both the satellite positioning unit and the short packet unit in the BeiDou communication module, and the spring is connected to the conductive material; and
from an end that is of the accommodating cavity and that is away from the spring to an end that is of the accommodating cavity and that is close to the spring, a cross-sectional area of the accommodating cavity tends to increase.

23. The wearable device according to any one of claims 19 to 22, wherein
the first part of the conductive material is metal; and/or
the second part of the conductive material is a conductive ceramic; and/or
a material of the second housing is a non-conductive ceramic.

24. The wearable device according to claim 5, wherein
the housing forms installation space through enclosing, and the accommodating cavity penetrates the housing and is in communication with the installation space; and both the BeiDou communication module and the processor are located in the installation space; and
the antenna radiator has an exposed end located outside the accommodating cavity, and the antenna radiator is telescopic, so that a distance between the exposed end and the housing changes.

25. The wearable device according to claim 24, wherein
the antenna radiator comprises at least two sub-radiators that are slidably connected in sequence, and at least a part of one of the sub-radiators is located in the accommodating cavity.

26. The wearable device according to claim 25, wherein
each of the sub-radiators is of a tubular structure; and in every two adjacent sub-radiators, one of the sub-radiators is located on a periphery of the other sub-radiator.

27. The wearable device according to any one of claims 24 to 26, wherein
the wearable device comprises a display, and the display has a display plane; and the display is installed on the housing and covers the installation space; and
the antenna radiator is telescopic in a direction parallel to the display plane of the display.

28. The wearable device according to any one of claims 1 to 4, wherein
the wearable device comprises a housing and a wearing band, and the wearing band is connected to an outer side of the housing; and
both the BeiDou communication module and the processor are located in the housing; and the antenna radiator is located in the wearing band.

29. The wearable device according to claim 28, wherein
the wearable device comprises a circuit board, a spring bar shaft, and a spring;
the circuit board is located in the housing, and the BeiDou communication module and the processor are both arranged on the circuit board; and the spring is installed on the circuit board and is electrically connected to both the satellite positioning unit and the short packet unit in the BeiDou communication module; and
the spring bar shaft is installed on the outer side of the housing; and the spring bar shaft is connected to the wearing band, and the spring bar shaft connects the antenna radiator to the spring.

30. The wearable device according to any one of claims 1 to 29, wherein
the wearable device further comprises the first communication module, and the first communication module is electrically connected to both the processor and the antenna radiator; and the first communication module is configured to multiplex, under control of the processor, the antenna radiator to receive/send the first network signal.

31. The wearable device according to any one of claims 1 to 30, wherein
the wearable device comprises the first communication module; and the first communication module is configured to: establish a communication connection to an external device under control of the processor, and receive key information of a BeiDou short packet service from the external device; and
the processor is configured to control, based on the key information, the short packet unit in the BeiDou communication module to receive/send the BeiDou short packet by using the antenna radiator.

32. The wearable device according to any one of claims 1 to 30, wherein
the wearable device comprises the first communication module and a subscriber identity module, and both the first communication module and the subscriber identity module are electrically connected to the processor; and the first communication module is configured to: establish a communication connection to an external device under control of the processor, and receive a configuration file of a BeiDou short packet service from the external device, wherein the configuration file comprises key information of the BeiDou short packet service; and
the processor supports an ISO7816 protocol interaction function, and the processor is configured to write the configuration file into the subscriber identity module; and the processor is further configured to control, based on the key information in the configuration file, the short packet unit in the BeiDou communication module to receive/send the BeiDou short packet by using the antenna radiator.

33. The wearable device according to any one of claims 1 to 30, wherein
the wearable device comprises the first communication module and a subscriber identity module, both the first communication module and the subscriber identity module are electrically connected to the processor, the first communication module supports electrical connection and software protocol interaction with the subscriber identity module by using the ISO7816 protocol, and the first communication module is configured to: establish a communication connection to an external device under control of the processor, and receive a configuration file of a BeiDou short packet service from the external device, wherein the configuration file comprises key information of the BeiDou short packet service; and
the processor is configured to write the configuration file into the subscriber identity module; and the processor is further configured to control, based on the key information in the configuration file, the short packet unit in the BeiDou communication module to receive/send the BeiDou short packet by using the antenna radiator.

34. The wearable device according to any one of claims 31 to 33, wherein
the first communication module is configured to: establish a communication connection to the external device under control of the processor, and receive user-defined information from the external device; and
the BeiDou short packet sent by the antenna radiator carries the user-defined information.

35. The wearable device according to any one of claims 1 to 30, wherein
the wearable device comprises a universal serial bus interface; and the universal serial bus interface is configured to: connect to an external device and receive key information of a BeiDou short packet service from the external device; and
the processor is configured to control, based on the key information, the short packet unit in the BeiDou communication module to receive/send the BeiDou short packet by using the antenna radiator.

36. The wearable device according to claim 35, wherein
the universal serial bus interface is further configured to: connect to the external device, and receive user-defined information from the external device; and
the BeiDou short packet sent by the antenna radiator carries the user-defined information.

37. The wearable device according to any one of claims 1 to 36, wherein
the wearable device comprises a physical sign monitoring module, and the physical sign monitoring module is configured to collect a physical sign parameter under control of the processor; and
the BeiDou short packet sent by the antenna radiator carries the physical sign parameter.

38. The wearable device according to any one of claims 1 to 37, wherein
the wearable device comprises a natural environment monitoring module, wherein the natural environment monitoring module is configured to collect a natural environment parameter under control of the processor; and
the BeiDou short packet sent by the antenna radiator carries the natural environment parameter.

39. A BeiDou short packet sending method, wherein
the sending method is applied to the wearable device according to any one of claims 1 to 38, and the sending method comprises:
when receiving an input signal and/or when determining that a current environment meets a trigger condition, controlling, by the processor of the wearable device, the short packet unit in the BeiDou communication module to send a BeiDou short packet by using the antenna radiator.

40. The sending method according to claim 39, wherein
the current environment comprises at least one of a network environment, a current moment, a natural environment parameter, and a physical sign parameter, and the network environment comprises a signal strength of a cellular network and/or a signal strength of a BeiDou satellite network;
when the current environment is the network environment, the trigger condition comprises the following condition: duration in which the signal strength of the cellular network is less than a signal strength threshold exceeds specified duration, and/or duration in which the signal strength of the BeiDou satellite network is less than a signal strength threshold exceeds specified duration;
when the current environment is the current moment, the trigger condition comprises the following condition: the current moment is a specified moment; and
when the current environment is the natural environment parameter and/or the physical sign parameter, the trigger condition comprises the following condition: a deviation between the natural environment parameter and/or the physical sign parameter and a specified value exceeds a threshold.

41. The sending method according to claim 39 or 40, wherein
the controlling the short packet unit in the BeiDou communication module to send a BeiDou short packet by using the antenna radiator comprises:
controlling, according to a sending policy, the short packet unit in the BeiDou communication module to send the BeiDou short packet by using the antenna radiator, wherein the sending policy comprises:
when a quantity of remaining BeiDou short packets that can be sent is less than a threshold, and/or when remaining power of the wearable device is less than a threshold,
selecting a BeiDou short packet with a highest priority in a BeiDou short packet list for sending; or
reassembling and sending a BeiDou short packet in a BeiDou short packet list; or
sending a BeiDou short packet selected by a user from a BeiDou short packet list.

42. The sending method according to claim 41, wherein
the sending method comprises: determining, by the processor based on the remaining power of the wearable device and energy consumption in receiving/sending the BeiDou short packet, the quantity of the remaining BeiDou short packets that can be sent.

43. The sending method according to any one of claims 39 to 42, wherein
the controlling the short packet unit in the BeiDou communication module to send a BeiDou short packet by using the antenna radiator comprises:
controlling, according to a sending policy, the short packet unit in the BeiDou communication module to send the BeiDou short packet by using the antenna radiator, wherein the sending policy comprises:
when a status indicated by the physical sign parameter, the natural environment parameter, and/or power information of the wearable device is a safe state, first buffering a to-be-sent BeiDou short packet, and when it is detected that the user operates the wearable device, sending the buffered BeiDou short packet; or
when a status indicated by the physical sign parameter, the natural environment parameter, and/or power information of the wearable device is an unsafe state, directly sending the BeiDou short packet.

44. The sending method according to any one of claims 39 to 43, wherein
the BeiDou short packet sent by the antenna radiator carries at least one of the natural environment parameter, the physical sign parameter, preset information, and user-defined information.

45. A wearable device, wherein the wearable device comprises:
a processor and a non-transitory computer-readable storage medium, wherein the non-transitory computer-readable storage medium is coupled to the processor and stores a program that is executed by the processor, and when the program is executed by the processor, the wearable device is enabled to perform the sending method according to any one of claims 39 to 44.

46. A non-transitory computer-readable storage medium, comprising program code, wherein when the program code is executed by a computer device, the sending method according to any one of claims 39 to 44 is performed.

47. A chip, comprising a processor, configured to: invoke a computer program from a memory and run the computer program, so that a device on which the chip is installed performs the method according to any one of claims 39 to 44.
